# EUROPEAN PATENT SPECIFICATION

(11) **EP 3 493 591 B1**
(45) Date of publication and mention of the grant of the patent: **22.12.2021**
(21) Application number: 17838393.1
(22) Date of filing: 18.05.2017
(51) Int. Cl.: H04W 28/24, H04L 12/801, H04W 28/16

(54) **SERVICE TRANSMISSION CONTROL METHOD AND RELATED DEVICE**
DIENSTÜBERTRAGUNGSSTEUERUNGSVERFAHREN UND ZUGEHÖRIGE VORRICHTUNG
PROCÉDÉ DE COMMANDE DE TRANSMISSION DE SERVICE ET DISPOSITIF ASSOCIÉ

(30) Priority: 11.08.2016 CN 201610659361
(43) Date of publication of application: 05.06.2019
(73) Proprietor: Huawei Technologies Co., Ltd., Longgang District Shenzhen, Guangdong 518129 (CN)
(72) Inventor: PANG, Lingli, Shenzhen Guangdong 518129 (CN); ZHENG, Xiaoxiao, Shenzhen Guangdong 518129 (CN); HUANG, Min, Shenzhen Guangdong 518129 (CN); YANG, Xudong, Shenzhen Guangdong 518129 (CN); ZHU, Fenqin, Shenzhen Guangdong 518129 (CN); HAN, Lifeng, Shenzhen Guangdong 518129 (CN)
(74) Representative: Epping - Hermann - Fischer
(86) International application number: PCT/CN2017/084803
(87) International publication number: WO 2018/028261

(56) References cited:
- EP-A1- 2 117 183
- WO-A1-2014/036704
- WO-A1-2015/192295
- WO-A1-2015/192295
- CN-A- 103 905 378
- CN-A- 104 507 128
- US-A1- 2008 123 660
- US-A1- 2015 296 559

## Description

### TECHNICAL FIELD

Embodiments of the present disclosure relate to the field of communications technologies, and in particular, to a service transmission control method and related device.

### BACKGROUND

During end-to-end service communication in an Internet Protocol (English: Internet Protocol, IP) network, an important factor for implementing service communication is to ensure a quality of service (English: Quality of Service, QoS) of a service data flow. Types of services communicated by using the IP network are different, for example, a relatively high QoS parameter needs to be configured for a real-time type service such as a video call, and a relatively low QoS parameter needs to be configured for a data communication type service such as web browsing. Therefore, to control QoS parameter of different service types, different values are configured for QoS parameters of different service types. The QoS parameter includes a service priority, a guaranteed bit rate, a maximum bit rate, a preemption indication, and the like. In a conventional technology, a QoS parameter set for each service type is set for an entire transmission process of implementing the service type. To be specific, a QoS parameter of a bearer/service is basically fixed during execution of the service. For example, in a policy and charging control (English: Policy and Charging Control, PCC) architecture, a corresponding quality of service class identifier (English: QoS Class Identifier, QCI), a corresponding allocation and retention priority (English: Allocation and Retention Priority, ARP), and the like are defined for each service type. The QCI corresponds to different indicators, such as a data transmission delay and a packet loss rate.

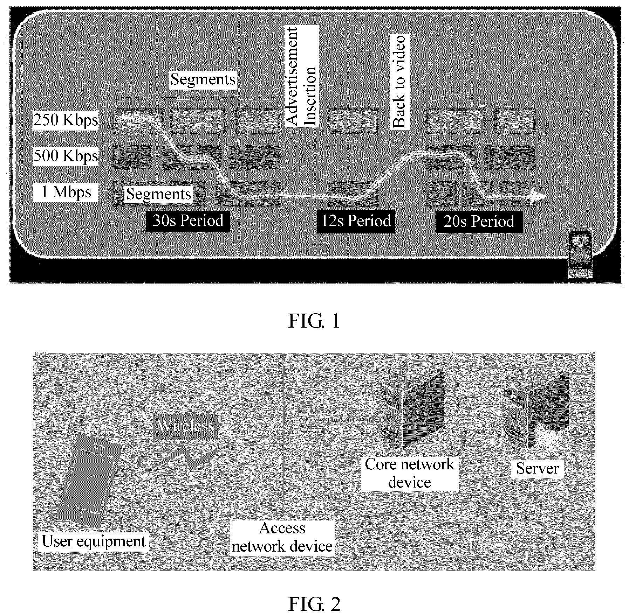

A QoS parameter set for a service type is specific to an entire transmission process of transmitting a service data flow of the service type. Therefore, for a scenario in which a service feature in a service type frequently changes, an existing QoS mechanism cannot be used to flexibly adjust a QoS parameter based on the service feature. A video on demand (English: Video On Demand, VOD) service type is used as an example. As shown in FIG. 1, during download of a video segment, requirements on a download rate of the video segment are different during different periods. The download rate is a service feature in the video on demand service type. In FIG. 1, a video downloaded by user equipment (English: User Equipment, UE) has play duration of 62s in total. During a play period from 0s to 30s, a requirement of the UE on the download rate of the video segment is increased from 250 Kbps to 1 Mbps; and during a play period from 42s to 62s, the requirement of the UE on the download rate of the video segment is increased from 500 Kbps to 1 Mbps. It may be learned from FIG. 1 that in an entire video download process, a requirement of the UE on the download rate of the video segment continuously changes. If a QoS parameter is set to a fixed value, the QoS parameter cannot adapt to the flexibly changed service feature. For example, if an excessively high QoS parameter is set, an evolved NodeB (English: evolved NodeB, eNB) always attempts to transmit, by using a high QoS parameter, a video segment that the UE requests to download, causing waste of air interface resources. If an excessively low QoS parameter is set, user experience of viewing the video is relatively poor.

Document WO 2015/192295 A1 provides a method and a device for controlling QoS of a service. The service includes a GBR service having a first service stage and a second service stage. The method includes: obtaining a service type of the service; obtaining a first QoS requirement for the first service stage and a second QoS requirement for the second service stage; and generating indication information indicating the QoS first requirement for the first service stage, the second QoS requirement for the second service stage and a service stage sign used to identify the first service stage and the second service stage. The indication information is used to identify the service stage and generate a QoS policy so as to control QoS in the first service stage and QoS in the second service stage. Accordingly, resource is efficiently allocated while user experience is guaranteed.

Document US 2015/0296559 A1 discloses a data transmission method and apparatus. Accordingly, when transmitting data by using a first radio bearer, a UE receives radio resource control connection reconfiguration information sent by a base station; the UE obtains a second radio bearer according to the radio resource control connection reconfiguration information; the UE sends radio resource control connection reconfiguration completion information to the base station; the UE transmits a part of the data which has not been transmitted by using the second radio bearer. The solutions provided are suitable to be adopted during switch between an adaptive streaming mode and a progressive download mode.

Document EP2117183 A1 discloses a method for providing quality of service control for a stream comprising data of different importance. A device receives data of different importance from the stream, and generates quality of service control information for each frame based on the importance of data. The quality of service control information is used to differentiate the frame so as to provide an intra-flow data differentiation.

### SUMMARY

The present invention is defined by the attached set of claims.

Embodiments of the present disclosure provide a service transmission control method and a related device, to flexibly adjust QoS parameters for different service data flows during service transmission.

According to a first aspect, a service transmission control method is disclosed, the method comprising: receiving (S301), by a service transmission control device, indication information from a service transmission device, wherein the indication information is an identifier of a target service feature information corresponding to a target service data flow transmitted by the service transmission device and the target service feature information is a service feature information, and the target service data flow is one of a plurality of service data flows comprised in a target service transmitted by a service transmission device; and determining (S303), by the service transmission control device, by querying a pre-recorded table of mapping between a service feature information identifier and the service feature information a target quality of service parameter corresponding to the target service data flow, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission control device and is determined by a negotiation with the service transmission device in advance for the service feature information and the service feature information identifier.

According to a second aspect, a service transmission control method is disclosed, the method comprising: generating (S301), by a service transmission device, indication information; and sending (S302), by the service transmission device, the indication information to a service transmission control device, wherein the indication information is an identifier of a target service feature information corresponding to a target service data flow transmitted by the service transmission device and the target service feature information is a service feature information, the target service data flow is one of a plurality of service data flows comprised in a target service transmitted by the service transmission device, and the indication information is used by the service transmission control device to determine a target quality of service parameter corresponding to the target service data flow by querying a pre-recorded table of mapping between a service feature information identifier and the service feature information, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission device and is determined by a negotiation with the service transmission device in advance for the service feature information and the service feature information identifier.

According to a third aspect, a service transmission control device is disclosed, the service transmission control device comprising a receiver and a processor, wherein the receiver is configured to receive indication information from a service transmission device, wherein the indication information is an identifier of a target service feature information corresponding to a target service data flow transmitted by the service transmission device and the target service feature information is a service feature information, and the target service data flow is one of a plurality of service data flows comprised in a target service transmitted by a service transmission device; and the processor is configured to determine, by querying a pre-recorded table of mapping between a service feature information identifier and the service feature information a target quality of service parameter corresponding to the target service data flow, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission control device and is determined by a negotiation with the service transmission device in advance for the service feature information and the service feature information identifier.

According to a fourth aspect, a service transmission device is disclosed, the service transmission device comprising a processor and a transmitter, wherein the processor is configured to generate indication information; and the transmitter is configured to send the indication information to a service transmission control device, wherein the indication information is an identifier of a target service feature information corresponding to a target service data flow transmitted by the service transmission device and the target service feature information is a service feature information, the target service data flow is one of a plurality of service data flows comprised in a target service transmitted by the service transmission device, and the indication information is used by the service transmission control device to determine a target quality of service parameter corresponding to the target service data flow by querying a pre-recorded table of mapping between a service feature information identifier and the service feature information, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission device and is determined by a negotiation with the service transmission device in advance for the service feature information and the service feature information identifier.

### BRIEF DESCRIPTION OF DRAWINGS

FIG. 1 is a schematic diagram of a change of a VOD service rate during different periods;
FIG. 2 is a schematic architectural diagram of a communications system according to an embodiment of the present disclosure;
FIG. 3 is a schematic flowchart of a service transmission control method according to an embodiment of the present disclosure;
FIG. 4 is a schematic flowchart of another service transmission control method according to an embodiment of the present disclosure;
FIG. 5 is a schematic flowchart of another service transmission control method according to an embodiment of the present disclosure;
FIG. 6 is a schematic structural diagram of a service transmission control device according to an embodiment of the present disclosure;
FIG. 7 is a schematic structural diagram of a service transmission device according to an embodiment of the present disclosure;
FIG. 8 is a schematic structural diagram of another service transmission control device according to an embodiment of the present disclosure;
FIG. 9 is a schematic structural diagram of another service transmission device according to an embodiment of the present disclosure;
FIG. 10 is a schematic structural diagram of another service transmission control device according to an embodiment of the present disclosure; and
FIG. 11 is a schematic structural diagram of another service transmission device according to an embodiment of the present disclosure.

### DESCRIPTION OF EMBODIMENTS

FIG. 2 is a schematic architectural diagram of a communications system according to an embodiment of the present disclosure. The communications system includes user equipment, an access network device, a core network device, and a server. The user equipment and the access network device communicate with each other by using an air interface technology. The air interface technology may include existing 2G (for example, a Global System for Mobile Communications (English: Global System for Mobile Communications, GSM)), 3G (for example, a Universal Mobile Telecommunications System (English: Universal Mobile Telecommunications System, UMTS), Wideband Code Division Multiple Access (English: Wideband Code Division Multiple Access, WCDMA), and Time Division-Synchronous Code Division Multiple Access (English: Time Division-Synchronous Code Division Multiple Access, TD-SCDMA)), and 4G (for example, FDD LTE and TDD LTE), and a new radio access technology (English: New Radio Access Technology, New RAT) system, for example, a 4.5G system and a 5G system to appear on the market in the future.

The UE described in this embodiment of the present disclosure is described in a general sense. In addition, the user equipment may also be referred to as a mobile console, an access terminal, a subscriber unit, a subscriber station, a mobile station, a remote station, a remote terminal, a mobile device, a user terminal, a terminal, a wireless communications device, a user agent, a user apparatus, or the like. The terminal device may be a station (English: Station, ST) in a wireless local area network (English: Wireless Local Area Network, WLAN), a cellular phone, a cordless phone, a Session Initiation Protocol (English: Session Initiation Protocol, SIP) phone, a wireless local loop (English: Wireless Local Loop, WLL) station, a personal digital assistant (English: Personal Digital Assistant, PDA), a handheld device having a wireless communication function, a computing device, another processing device connected to a wireless modem, an in-vehicle device, a wearable device, a mobile station in a future 5G network, or a terminal device in a future evolved public land mobile network (English: Public Land Mobile Network, PLMN). In addition, in this embodiment of the present disclosure, the user equipment may further include another device, such as a relay, (English: Relay), that can perform data communication with the access network device (for example, a base station).

The access network device described in this embodiment of the present disclosure may be a device configured to communicate with the user equipment. Specifically, in a wireless communications system, the access network device may be a device that communicates with the user equipment in a wireless manner. For example, the access network device may be an access point (English: Access Point, AP) in a WLAN or a base transceiver station (English: Base Transceiver Station, BTS) in GSM or CDMA; may be an NB (English: NodeB) in WCDMA; or may be an evolved NodeB (English: evolved NodeB, eNB) in LTE, a relay station, an access point, an in-vehicle device, a wearable device, an access network device in a future 5G network, or an access network device in a future evolved PLMN.

The core network device described in this embodiment of the present disclosure includes but is not limited to a serving GPRS support node (English: Serving GPRS Support Node, SGSN) or a mobile switching center (English: Mobile Switching Center, MSC) in a 3G system, and a mobility management entity (English: Mobility Management Entity, MME) in a 4G system.

The server described in this embodiment of the present disclosure is specifically a service server. To be specific, the server may be a server that can provide a service data packet for the user equipment, or a server that can collect a service reported by the user equipment, for example, a server of a service provider such as Youku and iQIYI. The service includes but is not limited to a video service, an audio service, and the like.

It should be noted that a service transmission device described in the following embodiments may be the user equipment or the server. A service transmission control device described in the embodiments may be the access network device or the core network device, or may be a control plane entity or a user plane entity on a network side.

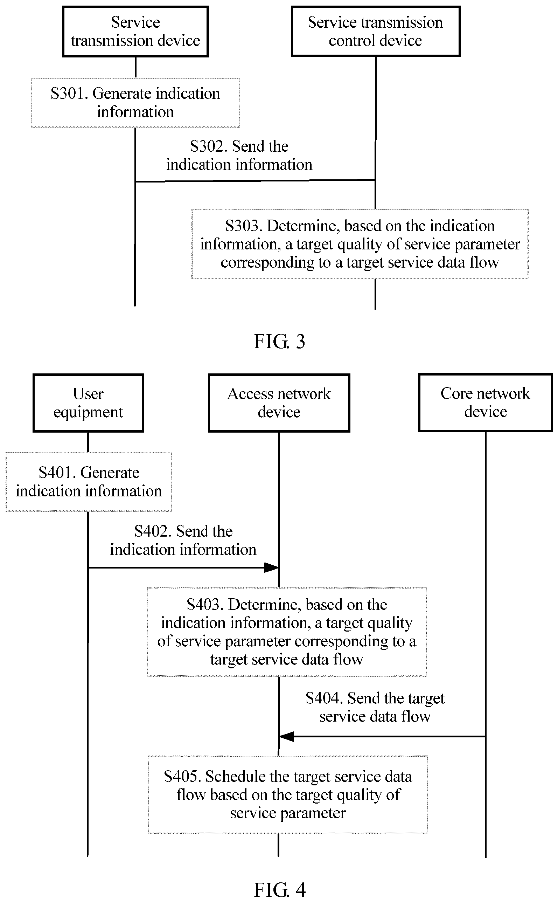

FIG. 3 is a schematic flowchart of a service transmission control method according to an embodiment of the present disclosure. The method includes but is not limited to the following steps.

S301. A service transmission device generates indication information.

S302. The service transmission device sends the indication information to a service transmission control device.

In an implementation, the indication information is specifically target service feature information corresponding to a target service data flow transmitted by the service transmission device. The target service data flow is a service data flow in a target service to be transmitted by the service transmission device, and the target service includes at least one service data flow. The target service feature information includes but is not limited to at least one of the following parameters: a service data packet transmission delay, a packet loss rate, a jitter rate, a bandwidth, a service data packet size (or a service volume), a service data packet transmission interval, a required service data packet transmission rate, and a service subflow priority. The service subflow priority is specific to a case in which one service includes a plurality of sub flows. For example, a video file usually includes a video flow and an audio flow, and a service includes a control flow and a data flow that are at a transport layer. It should be noted that the subflows may be carried on different links, or may be carried on a same link; or data packets in the plurality of subflows are encapsulated together. Preferably, the service transmission control device uses the service subflow priority based on that service transmission subflows are distinguished from each other. A video service for which a progressive download manner is used is used as an example. When or before requesting to download a target segment (namely, the target service data flow described in this embodiment), user equipment may obtain service feature information (namely, the target service feature information) corresponding to the target segment. The service feature information specifically includes play duration of the target segment, a bit rate (or an encoding rate) of the target segment, a cache size at a receive end, a cache threshold at the receive end, and the like. Preferably, the play duration of the target segment and the bit rate of the target segment may be obtained from an index file of the video service, and the index file is obtained by the user equipment from a server before the user equipment requests to download the target segment. Then the user equipment sends, to the service transmission control device, the obtained service feature information corresponding to the target segment. After receiving the service feature information, the service transmission control device can directly learn of a service feature corresponding to the target service data flow transmitted by the service transmission device. There are a plurality of other download manners in addition to the progressive download manner, and such different download manners are referred to herein as different lkmedia processing mode. Different media processing modes cause different service feature changes, and therefore correspond to different service feature information. Different media processing modes and corresponding service feature information are not enumerated one by one herein.

Alternatively, the indication information is specifically an identifier of the target service feature information. After receiving the identifier of the target service feature information, the service transmission control device may learn, by querying a table of mapping between service feature information and a service feature information identifier, of the service feature information corresponding to the target service data flow. The service transmission device also stores the table of mapping between service feature information and a service feature information identifier.

For example, the service transmission device negotiates with the service transmission control device in advance for service feature information and a service feature information identifier, and both the service transmission device and the service transmission control device store the table of mapping between a service feature information identifier and service feature information. Therefore, after determining the service feature information corresponding to the target service data flow, the service transmission device does not need to directly transmit the service feature information, but notifies, by transmitting the identifier corresponding to the service feature information, the service transmission control device of the service feature information corresponding to the target service data flow, so as to reduce transmitted content and save transmission resources. For the table of mapping between a service feature information identifier and service feature information, refer to a structure shown in the following Table 1. In Table 1, if service feature information is that a data flow identifier is a data flow and a transmission delay is 5s, a corresponding service feature information identifier is 1; or if service feature information is that a control flow identifier is a control flow a transmission delay is 2s, a corresponding service feature information identifier is 2, and so on. Further, when there are a plurality of data flows or control flows, the data flow identifier or the control flow identifier may be address information and/or port information that are/is of a connection.

**Table 1**

| **Service feature information identifier** | **Service feature information** |
|---|---|
| 1 | Data flow identifier: data flow; transmission delay: 5s |
| 2 | Control flow identifier: control flow; transmission delay: 2s |
| ··· | ··· |

In another implementation, the indication information may be a quality of service parameter identifier, and the quality of service parameter identifier is intended to uniquely determine a set of QoS parameters. For example, the quality of service parameter identifier may be a service feature information identifier, a QoS identifier, or the like. The service feature information identifier or the QoS identifier is obtained by the service transmission device in advance from the service transmission control device. A service feature information identifier or a QoS identifier from the service transmission device to the service transmission control device is used to identify a set of QoS parameters selected by the service transmission device. Therefore, after receiving the service feature information, the service transmission control device may determine a set of QoS parameters based on the service feature information identifier or the QoS identifier and a table of mapping between service feature information and a QoS parameter.

For example, referring to a mapping table shown in Table 2, in Table 2, the mapping table includes a service feature information identifier list, a service feature information list, a QoS parameter list, and a QoS identifier list. If service feature information is a data flow and a 5s transmission delay, a corresponding service feature information identifier is 1, a corresponding QoS parameter includes a priority 2 and a 2 Mbps bandwidth, and a corresponding QoS identifier is QoS 3. Alternatively, if service feature information is a control flow and a 2s transmission delay, a corresponding service feature information identifier is 2, a corresponding QoS parameter includes a priority 1 and a 1 Mbps bandwidth, and a corresponding QoS identifier is QoS 2; and so on. Therefore, the service transmission device or the service transmission control device may uniquely determine a set of QoS parameters by using the service feature information identifier or the QoS identifier. It should be noted that the mapping table shown in FIG. 2 is merely used as an example, and is not intended to limit a structure of the mapping table. The mapping table may include more or less content than that shown in Table 1. For example, the mapping table may include only the service feature information list, the QoS parameter list, and the QoS identifier list. A set of QoS parameters is determined based on the QoS identifier. In this embodiment, supplementary target service feature information may be a transmission delay. The QoS identifier can be used to obtain only a transmission delay range, and cannot be used to obtain a specific transmission delay value. Therefore, a specific value is given by using the supplementary target service feature information.

**Table 2**

| **Service feature information identifier** | **Service feature information** | **QoS parameter** | QoS **identifier** |
|---|---|---|---|
| 1 | Data flow; transmission delay: 5s | Priority: 2; bandwidth: 2 Mbps | QoS 3 |
| 2 | Control flow; transmission delay: 2s | Priority: 1; bandwidth: 1 Mbps | QoS 2 |
| ··· | ··· | ··· | |

In this embodiment of the present disclosure, the QoS parameter is specific to each service data flow. During service transmission, the service transmission device may send different indication information for different service data flows to the service transmission control device, so that the service transmission control device learns of different service feature information or QoS parameters corresponding to different service data flows, and sets, based on different service feature information or QoS parameter indication information, QoS parameters corresponding to different service data flows. Therefore, during service transmission, the service transmission control device may flexibly adjust QoS parameters for different service data flows.

In this embodiment of the present disclosure, when the indication information is a quality of service parameter identifier or a QoS identifier, the service transmission device may further send the supplementary target service feature information to the service transmission control device. The supplementary target service feature information is a subset of the target service feature information, and is used to more finely describe a feature of the target service data flow. Specifically, when transmitting the target service data flow, the service transmission device may add, to a protocol header of a service data packet to-be-sent to the service transmission control device, the indication information corresponding to the currently transmitted target service data flow. The target service data flow may correspond to a plurality of service data packets. For example, when sending a service data packet to a server by using an access network device, the UE adds, to a header of the service data packet at a TCP/IP transport layer, indication information of a service data flow to which the service data packet belongs, and then sends the data packet to the access network device. After receiving the data packet from the UE, the access network device may obtain, by parsing the TCP/IP header, the indication information corresponding to the currently transmitted service data flow. Alternatively, before transmitting a service data flow, the service transmission device may send, to the service transmission control device by using dedicated signaling or a dedicated bearer, indication information corresponding to a service data flow to be transmitted next time. For example, the UE may encapsulate, into an access stratum message, indication information corresponding to a service data flow, and send the indication information to the access network device. Alternatively, the UE encapsulates, into a non-access stratum message, indication information corresponding to a service data flow, and sends the indication information to a core network device.

S303. The service transmission control device determines, based on the indication information, a target quality of service parameter corresponding to a target service data flow.

If the indication information is the target service feature information, after receiving the target service feature information, the service transmission control device may determine the service feature corresponding to the target service data flow, and further determine, with reference to a network status of the service transmission control device, a QoS parameter corresponding to the target service feature information. Alternatively, the service transmission control device determines, based on the target service feature information and a pre-generated table of mapping between service feature information and a quality of service parameter, a QoS parameter corresponding to the target service feature information. Therefore, during service transmission, provided that the service transmission control device receives service feature information that corresponds to a service data flow and that is sent by the service transmission device, the service transmission control device can determine a QoS parameter for the service data flow, so that the QoS parameter can be dynamically and flexibly adjusted based on a service feature.

Alternatively, if the indication information is an identifier of the target service feature information, after receiving the identifier of the target service feature information, the service transmission control device may determine, by querying a pre-recorded table of mapping between a service feature information identifier and service feature information, the target service feature information corresponding to the identifier, and further determine, with reference to a network status of the service transmission control device, a QoS parameter corresponding to the target service feature information. Alternatively, the service transmission control device determines, based on the target service feature information and a pre-generated table of mapping between service feature information and a quality of service parameter, a QoS parameter corresponding to the target service feature information. Therefore, during service transmission, provided that the service transmission control device receives service feature information that corresponds to a service data flow and that is sent by the service transmission device, the service transmission control device can determine a QoS parameter for the service data flow, so that the QoS parameter can be dynamically and flexibly adjusted based on a service feature.

Alternatively, if the indication information is a service feature information identifier or a QoS identifier, after receiving the service feature information identifier or the QoS identifier, the service transmission control device may also determine, by querying a pre-stored table of mapping between service feature information and a quality of service parameter, a QoS parameter corresponding to the service feature information identifier or the QoS identifier. Therefore, during service transmission, provided that the service transmission control device receives a service feature information identifier or a QoS parameter that corresponds to a service data flow and that is sent by the service transmission device, the service transmission control device can determine a QoS parameter for the service data flow based on the service feature information identifier or the QoS parameter, so that the QoS parameter can be dynamically and flexibly adjusted based on a service feature.

In an optional implementation, before the service transmission device sends the indication information to the service transmission control device, the service transmission device sends a service feature information list to the service transmission control device. The service feature information list includes at least one piece of service feature information corresponding to the target service to be transmitted by the service transmission device. The at least one piece of service feature information includes the target service feature information. The service transmission control device determines at least one set of quality of service parameters corresponding to the at least piece of service feature information, and generates a table of mapping between the service feature information and the quality of service parameter. The mapping table includes a correspondence between a service feature set and a quality of service parameter set. The service feature set includes at least one piece of service feature information, and the quality of service parameter set includes at least one set of quality of service parameters. It should be noted that the target service is a general term of a service that is being performed or to be performed by the service transmission device. For the service transmission control device, a resource on a radio network side is consumed for the target service to transmit data. In this embodiment of the present disclosure, the target service includes at least one target service data flow. The target service data flow may be a set of service data packets of the target service during different periods, or may be a set of service data packets of different types of services of the target service during a same period. Different service data flows have different service features. The target service feature information may also be referred to as real-time service feature information, and "real-time" specifically means that the service transmission device reports the service feature information of the target service data flow to the service transmission control device before the target service data flow arrives. The service feature information list is a set of service features of target service data flows that may be included in the entire target service. Because the target service has a feature that a service feature frequently changes, the service transmission control device may determine a quality of service parameter range of the target service based on the service feature information list, and subsequently determine the quality of service parameter of the target service data flow based on a real-time service feature of the target service data flow.

In an optional implementation, the service feature information list is first sent to the service transmission control device, and the target service feature information is reported before or when the target service data flow starts, so that the service transmission control device may determine the service feature corresponding to the target service data flow. Preferably, the real-time service feature information is not completely consistent with service feature information, included in the service feature information list, of the target service, and the real-time service feature information includes more information or includes supplementary information of the service feature information.

In specific implementation, the service transmission device may be a device, such as user equipment or a server, that can obtain a service transmission feature. Optionally, in this embodiment of the present disclosure, the service transmission control device obtains, from the user equipment, the service feature information list corresponding to the target service and the target service feature information corresponding to the target service data flow. Alternatively, the service transmission control device obtains, from the server, the service feature information list corresponding to the target service and the target service feature information corresponding to the target service data flow. Alternatively, the service transmission control device obtains, from the server, the service feature information list corresponding to the target service, and obtains, from the user equipment, the target service feature information corresponding to the target service data flow. The foregoing descriptions are all implementations included in this embodiment of the present disclosure.

For example, a video service is still used as an example for description. It is assumed that the video service includes five service data flows that are respectively a video segment 1, a video segment 2, a video segment 3, a video segment 4, and a video segment 5, and that requirements on transmission rates of the five service data flows are respectively 250 Kbps, 500 Kbps, 1 Mbps, 250 Kbps, and 300 Kbps. At a beginning stage of downloading the video service, the UE sends a service feature information list to the service transmission control device. The service feature information list includes four pieces of rate information corresponding to the five service data flows. After receiving the service feature information list, the service transmission control device determines QoS parameters respectively corresponding to the four pieces of rate information. It should be noted that the QoS parameters respectively corresponding to the four pieces of rate information may be the same or different. For example, a set of QoS parameters corresponding to the rate 250 Kbps are a scheduling priority 1 and a transmission delay (<3s). A set of QoS parameters corresponding to the rate 300 Kbps are the scheduling priority 1 and the transmission delay (<3s). A set of QoS parameters corresponding to the rate 500 Kbps are a scheduling priority 2 and a transmission delay (<10s). A set of QoS parameters corresponding to the rate 1 Mbps are a scheduling priority 3 and a transmission delay (<15s). Then the service transmission control device generates a table of mapping between a service feature set and a quality of service parameter set. The mapping table is specifically shown in Table 3.

**Table 3**

| **Service feature information identifier** | **Service feature information** | **QoS parameter** | **QoS identifier** |
|---|---|---|---|
| Rate 1 | 250 Kbps | Scheduling priority 1 and transmission delay (<3s) | 1 |
| Rate 2 | 500 Kbps | Scheduling priority 2 and transmission delay (<10s) | 2 |
| Rate 3 | 1 Mbps | Scheduling priority 3 and transmission delay (<15s) | 3 |
| Rate 4 | 300 Kbps | Scheduling priority 1 and transmission delay (<3s) | 1 |

The service transmission control device sends the generated mapping table to the UE. After receiving the mapping table, the UE may learn of a QoS parameter corresponding to each rate, and may also learn of a QoS parameter corresponding to each video segment. Therefore, when sending a download request for the video segment 1 to the service transmission control device, the UE may add, to the download request, a QoS identifier (namely, QoS 1) corresponding to the video segment 1, rate information (namely, 250 Kbps) corresponding to the video segment 1, a service feature information identifier (namely, the rate 1) corresponding to the video segment 1, or a scheduling priority (namely, the scheduling priority 1) corresponding to the video segment 1, and further send the download request to the service transmission control device. The QoS identifier, the rate information, the service feature information identifier, and the scheduling priority each may be considered as a QoS parameter identifier, namely, an identifier that can uniquely identify a set of QoS parameters. After receiving the download request that carries the service feature information and that is sent by the UE, the service transmission control device extracts the QoS identifier, the rate information, the service feature information identifier, or the scheduling priority from the download request, and may further query the pre-generated mapping table, to obtain a set of QoS parameters (that is, the scheduling priority 1 and the transmission delay (<3s)) corresponding to the video segment 1.

Referring to FIG. 4, an example in which a service transmission control device is an access network device and a service transmission device is user equipment is used to describe an embodiment of the present disclosure. In this example, a downlink service data flow is described, and a service transmission control method mainly includes the following steps.

S401. User equipment generates indication information.

S402. The user equipment sends the indication information to the access network device.

The indication information is specifically target service feature information corresponding to a target service data flow, or the indication information is an identifier of the target service feature information, or the indication information is specifically a quality of service parameter identifier. The quality of service parameter identifier includes a service feature information identifier or a QoS identifier.

Optionally, when the indication information is the identifier of the target service feature information or the QoS identifier, the indication information further includes supplementary target service feature information. The supplementary target service feature information is supplementary or detailed descriptions of the target service feature information represented by the identifier of the target service feature information or the QoS identifier. For example, in Table 3, when the QoS identifier is 1, the supplementary target service feature information may be that a rate is 300 Kbps or that a rate is 250 Kbps.

S403. The access network device determines, based on the indication information, a target quality of service parameter corresponding to a target service data flow.

The access network device may determine, based on the target service feature information, the target quality of service parameter corresponding to the target service data flow. Alternatively, the access network device queryes a pre-recorded table of mapping between a service feature information identifier and service feature information based on the identifier of the target service feature information, to determine the target service feature information, and further determines, based on the target service feature information, the target quality of service parameter corresponding to the target service data flow.

Optionally, before the access network device determines the quality of service parameter of the target service data flow, the method further includes the following: The access network device receives a table of mapping that is between service feature information and a quality of service parameter and that is sent by a core network device. The core network device generates the mapping table based on a service feature information list sent by the user equipment.

Optionally, before the access network device determines the quality of service parameter of the target service data flow, the method further includes the following: The access network device receives the service feature information list from the service transmission device, where the service feature information list includes at least one piece of service feature information corresponding to a target service. The access network device determines at least one set of QoS parameters corresponding to the at least one piece of service feature information, and generates the table of mapping between service feature information and a quality of service parameter. The access network device queryes the table of mapping between service feature information and a quality of service parameter based on the quality of service parameter identifier, to determine a set of QoS parameters. The set of QoS parameters is used as the quality of service parameter corresponding to the target service data flow.

S404. The access network device receives the target service data flow from a core network device.

S405. The access network device schedules the target service data flow based on the quality of service parameter.

For example, the service transmission device is the UE, the service transmission control device is the access network device, and a target service transmitted by the UE is specifically a video service. An example in which the UE downloads a video file from a server for play is used for description. It is assumed that the video service includes five segments, which are referred to herein as five service data flows and are respectively a video segment 1, a video segment 2, a video segment 3, a video segment 4, and a video segment 5. Specifically, the service data flow in this embodiment may be specifically one or more of the five video segments. An example in which a service feature is a transmission rate is used for description. Rates corresponding to the five service data flows are respectively 250 Kbps, 500 Kbps, 1 Mbps, 250 Kbps, and 300 Kbps. Before the UE requests to download the video segment 1 or in a process in which the UE requests to download the video segment 1, the UE first sends rate information (250 Kbps) of the selected video segment 1 to the access network device. After receiving the rate information, the access network device sets a QoS parameter based on the rate information. It is assumed that a specified QoS parameter includes a scheduling priority 1 and a transmission delay (<3s). Then the access network device sends the QoS parameter to the core network device. After receiving a download data packet that carries the video segment 1 and that is sent by the server to the UE, the core network device correspondingly processes the download data packet based on the QoS parameter indicated by the access network device.

It should be noted that service feature information is only a reference used by the access network device to determine a QoS parameter. The QoS parameter is specifically determined depending on implementation of the access network device. For example, the access network device further determines a service parameter, of the target service, on the access network device side with reference to a current resource occupation status and air interface quality of the UE.

For another example, at the beginning stage of downloading a video file by the UE from a server, the UE sends, to the access network device, all service feature information corresponding to the to-be-downloaded video file. The access network device sets different QoS parameters for different service features. When a video segment is downloaded, the access network device may dynamically adjust a corresponding QoS parameter in real time with reference to a service feature corresponding to the video segment. Therefore, the access network device may adaptively adjust a QoS parameter in an entire service transmission process with reference to a real-time service feature of a transmitted service data flow. For example, the UE reports service feature information. At the beginning stage of downloading the video file by the UE, the UE sends, to the access network device, all four pieces of rate information corresponding to the to-be-downloaded video file: 250 Kbps, 500 Kbps, 1 Mbps, and 300 Kbps. After receiving the four pieces of rate information, the access network device sets different QoS parameters for different rate information with reference to a network resource of the access network device. Further, the access network device generates a table of mapping between rate information and a QoS parameter, and sends the mapping table to the UE. When requesting to download a video segment 1, the UE determines, by querying the mapping table and based on a rate of the video segment 1, namely, 250 Kbps, that a QoS parameter corresponding to 250 Kbps is a scheduling priority is 1 and a transmission delay (<3s). Then the UE sends a rate identifier (for example, a bit rate 1), the rate information (250 Kbps), or the QoS identifier (the scheduling priority 1 or QoS 1) to the access network device. After receiving the rate identifier, the rate information, or the QoS identifier, the access network device may determine a corresponding set of QoS parameters by querying the mapping table, and then schedule a service data flow based on the set of QoS parameters when receiving a video segment from the server to the UE.

Optionally, after determining, based on the indication information, the QoS parameter corresponding to the target service data flow, the access network device may further send the determined QoS parameter to the core network device, so that after receiving the target service data flow, the core network device processes the target service data flow based on the QoS parameter. Optionally, if the indication information is the target service feature information, the access network device may further send some or all of information in the target service feature information to the core network device when sending the QoS parameter to the core network device, so that after receiving the target service data flow, the core network device determines, based on the QoS parameter determined by the access network device and some or all of the information in the target service feature information, a QoS parameter for transmitting the target service data flow. Therefore, precision of determining the QoS parameter by the core network device may be improved. Optionally, if the indication information is the quality of service parameter identifier, the user equipment may further send supplementary target service feature information to the access network device. The supplementary target service feature information includes at least one parameter in the target service feature information.

The access network device may add the quality of service parameter to a protocol header of a to-be-sent service data packet, and send, to the core network device, the data packet to which the quality of service parameter is added. Alternatively, the access network device stores a correspondence between a quality of service parameter and a bearer, and the core network device also stores the correspondence. The access network device sends a service data packet to the core network device by using a dedicated bearer corresponding to the quality of service parameter. After receiving the data packet, the core network device may determine, based on the bearer used to transmit the data packet, a set of QoS parameters selected by the access network device.

It should be noted that the quality of service parameter in this embodiment of the present disclosure is a general term of a policy of the service transmission control device. Different types of service transmission control devices may correspond to different parameters. For example, for the core network device, the parameter may be access control information, charging information, subscription information, a control range of a data packet processing rate, or the like. For the access network device, the parameter may be scheduling priority information, a size of a to-be-sent data packet, or the like. When the access network device and the core network device each can determine a quality of service parameter, quality of service parameters determined by the access network device and the core network device may be different parameters or a same parameter. Usually, when the core network device determines the quality of service parameter, the access network device should determine processing for a service data flow based on the parameter determined by the core network device and a service feature.

It should be noted that a downlink service data packet is used as an example for description in this embodiment. For an uplink service data packet, a processing process is similar to the foregoing process, and details are not described herein again. For the downlink service data packet, after the quality of service parameter of the target service data flow is determined, preferably, the core network device needs to determine a start point of the target service data flow, and a specific determining manner may include the following: The core network device determines the start point of the target service data flow in a statistical manner; or the server adds the start point of the target service data flow to a protocol header of a data packet, and notifies the core network device of the starting point of the target service data flow. After determining the start point, the service transmission control device may perform precise control based on the determined quality of service parameter.

In this embodiment of the present disclosure, the access network device may further be divided into a control plane entity and a user plane entity. Preferably, in the architecture, the mapping table is from the control plane entity to the user plane entity, and the target service feature information (or the real-time service feature information) may be directly from the service transmission device to the user plane entity. The mapping table may be generated by the core network device, or may be generated by the control plane entity of the access network device.

In this embodiment of the present disclosure, in an optional implementation, the service transmission control device sends the service feature information list to the core network device, and the service transmission control device sends the target service feature information to the access network device. The access network device determines processing for the target service data flow based on the mapping table from the core network device and the target service feature information.

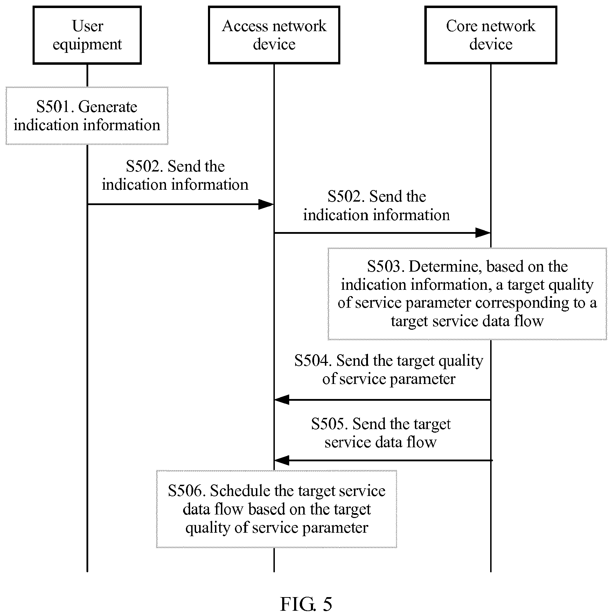

Referring to FIG. 5, an example in which a service transmission control device is a core network device and a service transmission device is user equipment is used to describe an embodiment of the present disclosure. In this example, a downlink service data flow is described, and the following steps are mainly included.

S501. User equipment generates indication information.

S502. The user equipment sends the indication information to the core network device.

The indication information is specifically target service feature information corresponding to a target service data flow, or the indication information is an identifier of the target service feature information, or the indication information is specifically a quality of service parameter identifier. The quality of service parameter identifier includes a service feature information identifier or a QoS identifier.

Specifically, the user equipment sends the indication information to an access network device by using an air interface, and then the access network device sends the received indication information to the core network device.

Optionally, before this step, the following is included: The user equipment sends a service feature information list to the core network device. The core network device determines a table of mapping between the service feature information list and a quality of service parameter based on the service feature information list, and sends the mapping table to the user equipment and the access network device.

S503. The core network device determines, based on the indication information, a target quality of service parameter corresponding to a target service data flow.

S504. The core network device sends the quality of service parameter to an access network device.

S505. The access network device receives the target service data flow from the core network device.

S506. The access network device schedules the target service data flow based on the quality of service parameter.

A manner in which the core network device determines the QoS parameter based on the indication information is the same as that described above, and details are not described herein again.

Optionally, after the core network device determines, based on the indication information, the quality of service parameter for transmitting the target service data flow, the core network device may further send the determined quality of service parameter to the access network device, so that after receiving the target service data flow, the access network device schedules the target service data flow based on the quality of service parameter determined by the core network device.

The core network device may add the quality of service parameter to a protocol header of a to-be-sent service data packet, and send, to the access network device, the data packet to which the quality of service parameter is added. Alternatively, the core network device stores a correspondence between a quality of service parameter and a bearer, and the access network device also stores the correspondence. The core network device sends a service data packet to the access network device by using a dedicated bearer corresponding to the quality of service parameter. After receiving the data packet, the access network device may determine, based on the bearer used to transmit the data packet, a set of QoS parameters selected by the core network device.

For example, in a process in which the UE downloads a video file from a server, the UE sends service feature information to the core network device. The core network device determines, based on the service feature information, a QoS parameter corresponding to a video service data flow. For example, the UE reports service feature information. The UE sends the indication information to the core network device. The indication information may be, for example, some or all of the following parameters: a service data packet transmission delay, a packet loss indication, a service data packet size (a service volume), a service data packet transmission rate, or a service data packet encoding rate. After receiving the indication information from the UE, the core network device determines, with reference to a current network resource, a set of QoS parameters corresponding to the service feature information, and further notifies the access network device of the determined QoS parameter. When receiving a video segment from the server to the UE, the access network device schedules a service data flow based on the set of QoS parameters. After determining the QoS parameter, the core network device may add the QoS parameter to a header (for example, a GTP-U) of a data packet to be sent to the access network device. After receiving the data packet that carries the QoS parameter and that is sent by the core network device, the access network device may parse the header of the data packet, to learn of the QoS parameter determined by the core network device. Alternatively, the core network device may implicitly notify the access network device of the QoS parameter. The core network device establishes a correspondence between a dedicated bearer (RB) and a QoS identifier or between a dedicated bearer (RB) and each of a QoS identifier and a flow identifier, and sends a service data packet in a bearer corresponding to the QoS identifier (which is a QoS identifier corresponding to the QoS parameter determined by the core network device) or the flow identifier (which is a flow identifier corresponding to the QoS parameter determined by the core network device). The access network device may learn, based on the bearer for receiving the data packet, of the QoS parameter determined by the core network device.

Optionally, the core network device may further send the QoS parameter determined by the core network device to the access network device. After receiving the QoS parameter from the core network device, the access network device further adjusts the QoS parameter based on a current air interface resource, air interface quality, supplementary target service feature information, and the like, and further schedules the target service data flow based on an adjusted QoS parameter. In this embodiment of the present disclosure, the core network device may further be divided into a control plane entity and a user plane entity. In an optional implementation, the control plane entity of the core network device determines the mapping table based on the service feature information list, and sends the mapping table to the user plane entity.

It should be noted that a range of the QoS parameter determined by the core network device is relatively large. To better meet a requirement of the access network device on setting of the QoS parameter, the core network device may further send some or all of information (for example, a delay parameter and identification information of a downlink data packet) in the target service feature information to the access network device when sending the QoS parameter to the access network device, so that after receiving the target service data flow, the access network device determines, based on the QoS parameter determined by the core network device and some or all of the information in the target service feature information, a QoS parameter for transmitting the target service data flow. Therefore, precision of determining the QoS parameter by the access network device may be improved.

It should be noted that a downlink service data packet is used as an example for description in this embodiment. For an uplink service data packet, a processing process is similar to the foregoing process, and details are not described herein again.

It should be noted that step S504 and step S505 may be performed simultaneously, or step S504 may be performed before step S505. This is not specifically limited in this embodiment of the present disclosure.

To facilitate better implementation of the service transmission control method in the embodiments of the present disclosure, the embodiments of the present disclosure further provide a related device for implementing the method.

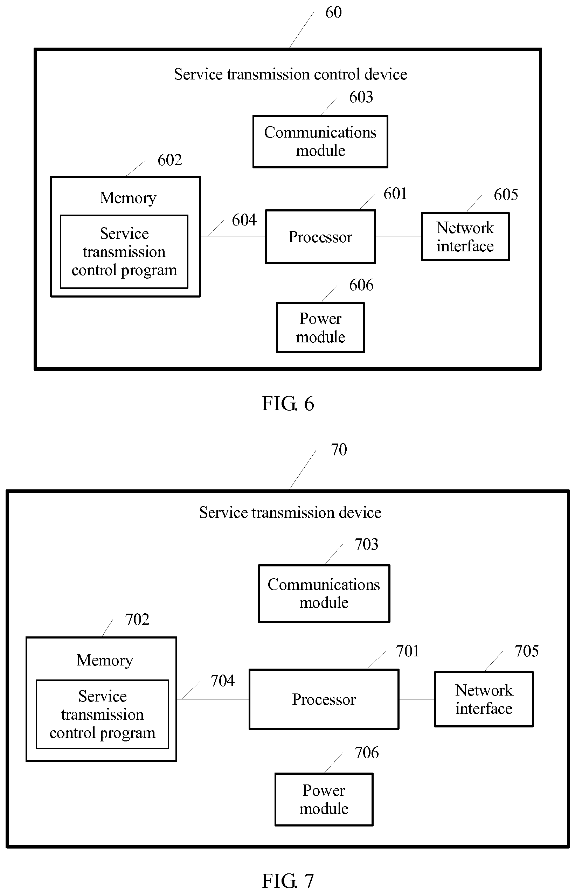

FIG. 6 is a schematic structural diagram of a service transmission control device according to an embodiment of the present disclosure. The service transmission control device may be an access network device or a core network device. A service transmission control device 60 includes a processor 601, a memory 602, a communications module 603, and a bus 604. The processor 601, the memory 602, and the communications module 603 may be connected to each other by using the bus or in another manner. For example, in FIG. 6, the connection is implemented by using the bus 604.

Optionally, the service transmission control device 60 may further include a network interface 605 and a power module 606.

The processor 601 may be a digital signal processing (English: Digital Signal Processing, DSP) chip.

The memory 602 is configured to store service transmission control program code. In specific implementation, the memory 602 may be a read-only memory (English: Read-Only Memory, ROM) or a random access memory (English: Random Access Memory, RAM), and may be configured to store the service transmission control program code.

The communications module 603 is configured to transmit a communication signal generated by the processor 601, and is further configured to receive a communication signal from another device.

The bus 604 may be an industry standard architecture (English: Industry Standard Architecture, ISA) bus, a peripheral component interconnect (English: Peripheral Component Interconnect, PCI) bus, an extended industry standard architecture (English: Extended Industry Standard Architecture, EISA) bus, an integrated circuit (English: Inter-Integrated Circuit, IIC) bus, or the like.

The network interface 605 is used by the service transmission control device 60 to perform data communication with another device, such as user equipment (a mobile station MS in 2G or UE in 3G and 4G). In specific implementation, if the service transmission control device 60 is a core network device, the network interface 605 may be a wired interface (for example, an Ethernet interface) or a wireless interface (for example, a WLAN interface). If the service transmission control device 60 is an access network device, the network interface 605 may include one or more of a GSM (2G) wireless network interface, a WCDMA (3G) wireless network interface, an LTE (4G) wireless network interface, and the like; or may be a wireless network interface in future 4.5G or 5G.

The power module 606 is configured to supply power to modules in the service transmission control device 60.

A person skilled in the art may understand that a structure of the service transmission control device 60 shown in FIG. 6 constitutes no limitation on the service transmission control device. The service transmission control device may include more or fewer components than those shown in the figure, or combine some components, or have a different component arrangement. It should be noted that a control plane (English: Control Plane, CP) and a user plane (English: User Plane, UP) of the service transmission control device 60 may be or may not be separated. This is not limited herein.

In this embodiment of the present disclosure, the processor 601 is further configured to invoke the service transmission control program code in the memory 602, to perform the following operations:
The processor 601 receives, by using the communications module 603, indication information from a service transmission device. The indication information is used to indicate target service feature information corresponding to a target service data flow transmitted by the service transmission device, or the indication information is used to indicate a quality of service parameter corresponding to a target service data flow transmitted by the service transmission device, and the target service data flow is one of a plurality of service data flows included in a target service transmitted by the service transmission device.

The processor 601 determines, based on the indication information, a target quality of service parameter corresponding to the target service data flow.

By performing the foregoing operations, the service transmission control device may determine, based on service feature indication information or quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow.

It should be noted that the service transmission control device 60 is applicable to a 2G communications system (for example, GSM), a 3G communications system (for example, a UMTS), and a 4G communications system (LTE), and is also applicable to a future 4.5G or 5G communications system.

Before the processor 601 receives, by using the communications module 603, the indication information from the service transmission device, the processor 601 is further configured to perform the following operations:
The processor 601 receives, by using the communications module 603, a service feature information list from the service transmission device. The service feature information list includes at least one piece of service feature information of the target service.

The processor 601 determines a quality of service parameter corresponding to the at least one piece of service feature information, and generates a table of mapping between the service feature information and the quality of service parameter.

By performing the foregoing operations, the service transmission control device determines, based on the service feature information list from the service transmission device, a quality of service parameter corresponding to each piece of service feature information in the service feature information list. During service transmission, the service transmission control device determines, based on the service feature information list from the service transmission device, a quality of service parameter corresponding to a transmitted service data flow. Therefore, during service transmission, the service transmission control device may flexibly adjust QoS parameters for different service data flows.

Optionally, the indication information is a quality of service parameter identifier, and the processor 601 is further configured to: send the mapping table to the service transmission device by using the communications module 603. The mapping table is used by the service transmission device to determine the quality of service parameter identifier.

That the processor 601 determines, based on the indication information, a target quality of service parameter corresponding to the target service data flow includes the following.

The processor 601 determines, based on the quality of service parameter identifier and the mapping table, the target quality of service parameter corresponding to the target service data flow.

Optionally, the service transmission control device is a core network device, and after the processor 601 determines, based on the indication information, the target quality of service parameter corresponding to the target service data flow, the processor 601 is further configured to perform the following operation:
The processor 601 notifies an access network device of the target quality of service parameter.

The target quality of service parameter is used by the access network device to determine a scheduling policy for the target service data flow.

By performing the foregoing operation, the core network device determines a quality of service parameter corresponding to a service data flow, and notifies the access network device of the quality of service parameter. The access network device schedules the service data flow based on the quality of service parameter determined by the core network device.

Optionally, that the processor 601 notifies an access network device of the target quality of service parameter includes the following:
The processor 601 adds the target quality of service parameter to a protocol header of a service data packet, and sends, to the access network device, the service data packet to which the target quality of service parameter is added; or the processor 601 sends a service data packet to the access network device by using a dedicated bearer corresponding to the target quality of service parameter.

By performing the foregoing operations, the core network device may directly or indirectly notify the access network device of the quality of service parameter corresponding to the target service data flow.

Optionally, the indication information is the target service feature information, and that the processor 601 notifies an access network device of the target quality of service parameter includes the following:

The processor 601 notifies the access network device of the target quality of service parameter and a first parameter. The target quality of service parameter and the first parameter are used by the access network device to determine the scheduling policy for the target service data flow, and the first parameter is some or all of information in the target service feature information.

By performing the foregoing operation, when notifying the access network device of the quality of service parameter determined by the core network device, the core network device may further send, to the access network device, some or all of the information in the target service feature information from the service transmission device, so that the access network device further determines, with reference to the quality of service parameter determined by the core network device and some or all of the information in the target service feature information, the quality of service parameter corresponding to the target service data flow, thereby improving precision of setting the quality of service parameter by the access network device.

Optionally, the service transmission control device is an access network device, and after the processor 601 determines, based on the indication information, the target quality of service parameter corresponding to the target service data flow, the processor 601 is further configured to perform the following operation:
The processor 601 notifies a core network device of the target quality of service parameter. The target quality of service parameter is used by the core network device to determine a processing policy for the target service data flow.

By performing the foregoing operation, the access network device determines a quality of service parameter corresponding to a service data flow, and notifies the core network device of the quality of service parameter. The core network device schedules the service data flow based on the quality of service parameter determined by the access network device.

Optionally, that the processor 601 notifies a core network device of the target quality of service parameter includes the following:
The processor 601 adds the target quality of service parameter to a protocol header of a service data packet, and sends, to the core network device, the service data packet to which the target quality of service parameter is added; or the processor 601 sends a service data packet to the core network device by using a dedicated bearer corresponding to the target quality of service parameter.

By performing the foregoing operations, the access network device may directly or indirectly notify the core network device of the quality of service parameter corresponding to the service data flow.

Optionally, the indication information is the target service feature information, and that the processor 601 notifies a core network device of the target quality of service parameter includes the following:
The processor 601 notifies the core network device of the target quality of service parameter and a second parameter. The target quality of service parameter and the second parameter are used by the core network device to determine the processing policy for the target service data flow, and the second parameter is some or all of information in the target service feature information.

By performing the foregoing operation, when notifying the core network device of the quality of service parameter determined by the access network device, the access network device may further send, to the core network device, some or all of the information in the target service feature information from the service transmission device, so that the core network device further determines, with reference to the quality of service parameter determined by the access network device and some or all of the information in the target service feature information, the quality of service parameter corresponding to the target service data flow, thereby improving precision of setting the quality of service parameter by the core network device.

It should be noted that functions of function modules in the service transmission control device 60 described in this embodiment of the present disclosure may be based on the related descriptions of the corresponding service transmission control device in the embodiment shown in FIG. 3, FIG. 4, or FIG. 5. Details are not described herein again.

FIG. 7 is a schematic structural diagram of a service transmission device according to an embodiment of the present disclosure and which is not covered by the scope of the independent claims. The service transmission device may be user equipment or a server. A service transmission device 70 includes a processor 701, a memory 702, a communications module 703, and a bus 704. The processor 701, the memory 702, and the communications module 703 may be connected to each other by using the bus or in another manner. For example, in FIG. 7, the connection is implemented by using the bus 704.

Optionally, the service transmission device 70 may further include a network interface 705 and a power module 706.

The processor 701 may be a digital signal processing (English: Digital Signal Processing, DSP) chip.

The memory 702 is configured to store service transmission control program code. In specific implementation, the memory 702 may be a ROM or a RAM, and may be configured to store the service transmission control program code.

The communications module 703 is configured to transmit a communication signal generated by the processor 701, and is further configured to receive a communication signal from another device.

The bus 704 may be an ISA bus, a PCI bus, an EISA bus, an IIC bus, or the like.

The network interface 705 is used by the service transmission device 70 to perform data communication with another device, such as an access network device (a BTS in 2G or an eNB in 3G and 4G). In specific implementation, if the service transmission device 70 is a server, the network interface 705 may be a wired interface (for example, an Ethernet interface) or a wireless interface (for example, a WLAN interface). If the service transmission device 70 is user equipment, the network interface 705 may include one or more of a GSM (2G) wireless network interface, a WCDMA (3G) wireless network interface, an LTE (4G) wireless network interface, and the like; or may be a wireless network interface in future 4.5G or 5G.

The power module 706 is configured to supply power to modules in the service transmission device 70.

A person skilled in the art may understand that a structure of the service transmission device 70 shown in FIG. 7 constitutes no limitation on the service transmission device. The service transmission device may include more or fewer components than those shown in the figure, or combine some components, or have a different component arrangement.

In this embodiment of the present disclosure, the processor 701 is further configured to invoke the service transmission control program code in the memory 702, to perform the following operations.

The processor 701 generates indication information.

The processor 701 sends, by using the communications module 703, the indication information to a service transmission control device. The indication information is used to indicate target service feature information corresponding to a target service data flow transmitted by the service transmission device, or the indication information is used to indicate a quality of service parameter corresponding to a target service data flow transmitted by the service transmission device, the target service data flow is one of a plurality of service data flows included in a target service transmitted by the service transmission device, and the indication information is used by the service transmission control device to determine a target quality of service parameter corresponding to the target service data flow.

By performing the foregoing operations, the service transmission device sends, to the service transmission control device, service feature indication information or quality of service parameter indication information that corresponds to the target service data flow. The service transmission control device may determine, based on the service feature indication information or the quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow.

It should be noted that the service transmission device 70 is applicable to a 2G communications system (for example, GSM), a 3G communications system (for example, a UMTS), and a 4G communications system (LTE), and is also applicable to a future 4.5G or 5G communications system.

Optionally, before the processor 701 generates the indication information, the processor 701 is further configured to: send, by using the communications module 703, a service feature information list to the service transmission control device. The service feature information list includes at least one piece of service feature information of the target service, and the service feature information list is used by the service transmission control device to determine a quality of service parameter corresponding to the at least one piece of service feature information.

By performing the foregoing operation, the service transmission device sends the service feature information list to the service transmission control device, and the service transmission control device determines, based on the service feature information list, a quality of service parameter corresponding to each piece of service feature information in the service feature information list. During service transmission, the service transmission control device determines, based on the service feature information list from the service transmission device, a quality of service parameter corresponding to a transmitted service data flow. Therefore, during service transmission, the service transmission control device may flexibly adjust QoS parameters for different service data flows.

Optionally, the service feature information is a quality of service parameter identifier, and before the processor 701 generates the indication information, the processor 701 is further configured to: receive, by using the communications module 703, a table that is of mapping between the service feature information and the quality of service parameter and that is sent by the service transmission control device; and determine the quality of service parameter identifier based on the mapping table.

It should be noted that functions of function modules in the service transmission device 70 described in this embodiment of the present disclosure may be based on the related descriptions of the corresponding service transmission device in the embodiment shown in FIG. 3, FIG. 4, or FIG. 5. Details are not described herein again.

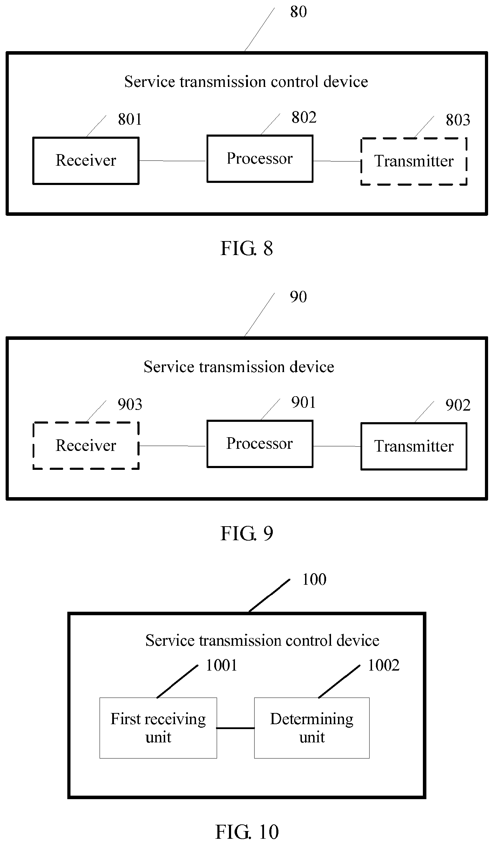

FIG. 8 is a schematic structural diagram of another service transmission control device according to an embodiment of the present disclosure. The service transmission control device may be an access network device or a core network device. A service transmission control device 80 includes a receiver 801 and a processor 802.

The processor 802 maybe a DSP chip.

The receiver 801 is configured to receive a communication signal from another device.

A person skilled in the art may understand that a structure of the service transmission control device 80 shown in FIG. 8 constitutes no limitation on the service transmission control device. The service transmission control device may include more or fewer components than those shown in the figure, or combine some components, or have a different component arrangement. It should be noted that a CP and a UP of the service transmission control device 80 may be or may not be separated. This is not limited herein.

In this embodiment of the present disclosure, the receiver 801 is configured to receive indication information from a service transmission device. The indication information is used to indicate target service feature information corresponding to a target service data flow transmitted by the service transmission device, or the indication information is used to indicate a quality of service parameter corresponding to a target service data flow transmitted by the service transmission device, and the target service data flow is one of a plurality of service data flows included in a target service transmitted by the service transmission device.

The processor 802 is configured to determine, based on the indication information, a target quality of service parameter corresponding to the target service data flow.

By performing the foregoing operations, the service transmission control device may determine, based on service feature indication information or quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow.

Before the receiver 801 is configured to receive the indication information from the service transmission device, the receiver 801 is further configured to receive a service feature information list from the service transmission device. The service feature information list includes at least one piece of service feature information of the target service.

The processor 802 is further configured to: determine a quality of service parameter corresponding to the at least one piece of service feature information, and generate a table of mapping between the service feature information and the quality of service parameter.

By performing the foregoing operations, the service transmission control device determines, based on the service feature information list from the service transmission device, a quality of service parameter corresponding to each piece of service feature information in the service feature information list. During service transmission, the service transmission control device determines, based on the service feature information list from the service transmission device, a quality of service parameter corresponding to a transmitted service data flow. Therefore, during service transmission, the service transmission control device may flexibly adjust QoS parameters for different service data flows.

The indication information is a quality of service parameter identifier, and the service transmission control device 80 further includes a transmitter 803.

The transmitter 803 is configured to send the mapping table to the service transmission device. The mapping table is used by the service transmission device to determine the quality of service parameter identifier.

That the processor 802 is configured to determine, based on the indication information, a target quality of service parameter corresponding to the target service data flow.

The processor 802 is configured to determine, based on the quality of service parameter identifier and the mapping table, the target quality of service parameter corresponding to the target service data flow.

Optionally, the service transmission control device is a core network device, and after the processor 802 is configured to determine, based on the indication information, the target quality of service parameter corresponding to the target service data flow, the processor 802 is further configured to notify an access network device of the target quality of service parameter. The target quality of service parameter is used by the access network device to determine a scheduling policy for the target service data flow.

By performing the foregoing operation, the core network device determines a quality of service parameter corresponding to a service data flow, and notifies the access network device of the quality of service parameter. The access network device schedules the service data flow based on the quality of service parameter determined by the core network device.

Optionally, that the processor 802 is further configured to notify an access network device of the target quality of service parameter.

The processor 802 is further configured to: add the target quality of service parameter to a protocol header of a service data packet, and send, to the access network device, the service data packet to which the target quality of service parameter is added; or the processor 802 is further configured to send a service data packet to the access network device by using a dedicated bearer corresponding to the target quality of service parameter.

By performing the foregoing operations, the core network device may directly or indirectly notify the access network device of the quality of service parameter corresponding to the target service data flow.

Optionally, the indication information is the target service feature information, and that the processor 802 is further configured to notify an access network device of the target quality of service parameter.

The processor 802 is further configured to notify the access network device of the target quality of service parameter and a first parameter. The target quality of service parameter and the first parameter are used by the access network device to determine the scheduling policy for the target service data flow, and the first parameter is some or all of information in the target service feature information.

By performing the foregoing operation, when notifying the access network device of the quality of service parameter determined by the core network device, the core network device may further send, to the access network device, some or all of the information in the target service feature information from the service transmission device, so that the access network device further determines, with reference to the quality of service parameter determined by the core network device and some or all of the information in the target service feature information, the quality of service parameter corresponding to the target service data flow, thereby improving precision of setting the quality of service parameter by the access network device.

Optionally, the service transmission control device is an access network device, and after the processor 802 is configured to determine, based on the indication information, the target quality of service parameter corresponding to the target service data flow, the processor 802 is further configured to notify a core network device of the target quality of service parameter. The target quality of service parameter is used by the core network device to determine a processing policy for the target service data flow.

By performing the foregoing operation, the access network device determines a quality of service parameter corresponding to a service data flow, and notifies the core network device of the quality of service parameter. The core network device schedules the service data flow based on the quality of service parameter determined by the access network device.

Optionally, that the processor 802 is further configured to notify a core network device of the target quality of service parameter.

The processor 802 is further configured to: add the target quality of service parameter to a protocol header of a service data packet, and send, to the core network device, the service data packet to which the target quality of service parameter is added; or the processor 802 is further configured to send a service data packet to the core network device by using a dedicated bearer corresponding to the target quality of service parameter.

By performing the foregoing operations, the access network device may directly or indirectly notify the core network device of the quality of service parameter corresponding to the service data flow.

Optionally, the indication information is the target service feature information, and that the processor 802 is further configured to notify a core network device of the target quality of service parameter.

The processor 802 is further configured to notify the core network device of the target quality of service parameter and a second parameter. The target quality of service parameter and the second parameter are used by the core network device to determine the processing policy for the target service data flow, and the second parameter is some or all of information in the target service feature information.

By performing the foregoing operation, when notifying the core network device of the quality of service parameter determined by the access network device, the access network device may further send, to the core network device, some or all of the information in the target service feature information from the service transmission device, so that the core network device further determines, with reference to the quality of service parameter determined by the access network device and some or all of the information in the target service feature information, the quality of service parameter corresponding to the target service data flow, thereby improving precision of setting the quality of service parameter by the core network device.

It should be noted that functions of function modules in the service transmission control device 80 described in this embodiment of the present disclosure may be based on the related descriptions of the corresponding service transmission control device in the embodiment shown in FIG. 3, FIG. 4, or FIG. 5. Details are not described herein again.

FIG. 9 is a schematic structural diagram of another service transmission device according to an embodiment of the present disclosure and which is not covered by the scope of the independent claims. The service transmission device may be user equipment or a server. A service transmission device 90 includes a processor 901 and a transmitter 902.

The processor 901 maybe a DSP chip.

The transmitter 902 is configured to transmit a communication signal generated by the processor 901.

In this embodiment of the present disclosure, the processor 901 is configured to generate indication information.

The transmitter 902 is configured to send the indication information to a service transmission control device. The indication information is used to indicate target service feature information corresponding to a target service data flow transmitted by the service transmission device, or the indication information is used to indicate a quality of service parameter corresponding to a target service data flow transmitted by the service transmission device, the target service data flow is one of a plurality of service data flows included in a target service transmitted by the service transmission device, and the indication information is used by the service transmission control device to determine a target quality of service parameter corresponding to the target service data flow.

By performing the foregoing operations, the service transmission device sends, to the service transmission control device, service feature indication information or quality of service parameter indication information that corresponds to the target service data flow. The service transmission control device may determine, based on the service feature indication information or the quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow. Optionally, before the processor 901 is configured to generate the indication information, the transmitter 902 is further configured to send a service feature information list to the service transmission control device. The service feature information list includes at least one piece of service feature information of the target service, and the service feature information list is used by the service transmission control device to determine a quality of service parameter corresponding to the at least one piece of service feature information.

By performing the foregoing operation, the service transmission device sends the service feature information list to the service transmission control device, and the service transmission control device determines, based on the service feature information list, a quality of service parameter corresponding to each piece of service feature information in the service feature information list. During service transmission, the service transmission control device determines, based on the service feature information list from the service transmission device, a quality of service parameter corresponding to a transmitted service data flow. Therefore, during service transmission, the service transmission control device may flexibly adjust QoS parameters for different service data flows.

Optionally, the service feature information is a quality of service parameter identifier, the service transmission device 90 further includes a receiver 903, and before the processor 901 is configured to generate the indication information, the receiver 903 is configured to receive a table that is of mapping between the service feature information and the quality of service parameter and that is sent by the service transmission control device.

The processor 901 is further configured to determine the quality of service parameter identifier based on the mapping table.

It should be noted that functions of function modules in the service transmission device 90 described in this embodiment of the present disclosure may be based on the related descriptions of the corresponding service transmission device in the embodiment shown in FIG. 3, FIG. 4, or FIG. 5. Details are not described herein again.

FIG. 10 is a schematic structural diagram of another service transmission control device according to an embodiment of the present disclosure and which is not covered by the scope of the independent claims. The service transmission control device may be an access network device or a core network device. As shown in FIG. 10, a service transmission control device 100 includes a first receiving unit 1001 and a determining unit 1002. The first receiving unit 1001 is configured to receive indication information from a service transmission device. The indication information is used to indicate target service feature information corresponding to a target service data flow transmitted by the service transmission device, or the indication information is used to indicate a quality of service parameter corresponding to a target service data flow transmitted by the service transmission device, and the target service data flow is one of a plurality of service data flows included in a target service transmitted by the service transmission device.

The determining unit 1002 is configured to determine, based on the indication information, a target quality of service parameter corresponding to the target service data flow.

By running the foregoing units, the service transmission control device may determine, based on service feature indication information or quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow.

In this embodiment, the service transmission control device 100 is presented in a form of a function unit. The "unit" herein may be an application-specific integrated circuit (English: Application-Specific Integrated Circuit, ASIC), a processor and a memory that execute one or more software or firmware programs, an integrated logic circuit, and/or another component that can provide the foregoing functions. The service transmission control device 100 may be in a form shown in FIG. 6. The first receiving unit 1001 may be implemented by using the communications module 603 in FIG. 6, and the determining unit 1002 may be implemented by using the processor 601 in FIG. 6. Alternatively, the service transmission control device 100 may be in a form shown in FIG. 8. The first receiving unit 1001 may be implemented by using the receiver 801 in FIG. 8, and the determining unit 1002 may be implemented by using the processor 802 in FIG. 8.

Optionally, the service transmission control device 100 further includes: a second receiving unit, configured to: before the first receiving unit 1001 receives the indication information from the service transmission device, receive a service feature information list from the service transmission device, where the service feature information list includes at least one piece of service feature information of the target service; and a generation unit, configured to: determine a quality of service parameter corresponding to the at least one piece of service feature information, and generate a table of mapping between the service feature information and the quality of service parameter.

By running the foregoing units, the service transmission control device determines, based on the service feature information list from the service transmission device, a quality of service parameter corresponding to each piece of service feature information in the service feature information list. During service transmission, the service transmission control device determines, based on the service feature information list from the service transmission device, a quality of service parameter corresponding to a transmitted service data flow. Therefore, during service transmission, the service transmission control device may flexibly adjust QoS parameters for different service data flows.

Optionally, the service feature information is a quality of service parameter identifier, and the service transmission control device 100 further includes: a sending unit, configured to send the mapping table to the service transmission device, where mapping table is used by the service transmission device to determine the quality of service parameter identifier.

The determining unit 1002 configured to: determine, based on the quality of service parameter identifier and the mapping table, the target quality of service parameter corresponding to the target service data flow.

Optionally, the service transmission control device 100 is a core network device, and the service transmission control device 100 further includes: a first notification unit, configured to: after the determining unit 1002 determines, based on the indication information, the target quality of service parameter corresponding to the target service data flow, notify an access network device of the target quality of service parameter, where the target quality of service parameter is used by the access network device to determine a scheduling policy for the target service data flow.

By running the foregoing unit, the core network device determines a quality of service parameter corresponding to a service data flow, and notifies the access network device of the quality of service parameter. The access network device schedules the service data flow based on the quality of service parameter determined by the core network device.

Optionally, the indication information is the target service feature information, and the first notification unit configured to notify the access network device of the target quality of service parameter and a first parameter. The target quality of service parameter and the first parameter are used by the access network device to determine the scheduling policy for the target service data flow, and the first parameter is some or all of information in the target service feature information.

By running the foregoing unit, when notifying the access network device of the quality of service parameter determined by the core network device, the core network device may further send, to the access network device, some or all of the information in the target service feature information from the service transmission device, so that the access network device further determines, with reference to the quality of service parameter determined by the core network device and some or all of the information in the target service feature information, the quality of service parameter corresponding to the target service data flow, thereby improving precision of setting the quality of service parameter by the access network device.

Optionally, the first notification unit configured to: add the target quality of service parameter to a protocol header of a service data packet, and send, to the access network device, the service data packet to which the target quality of service parameter is added; or send a service data packet to the access network device by using a dedicated bearer corresponding to the target quality of service parameter.

By running the foregoing unit, the core network device may directly or indirectly notify the access network device of the quality of service parameter corresponding to the target service data flow.

Optionally, the service transmission control device 100 is an access network device, and the service transmission control device 100 further includes: a second notification unit, configured to: after the determining unit 1002 determines, based on the indication information, the target quality of service parameter corresponding to the target service data flow, notify a core network device of the target quality of service parameter, where the target quality of service parameter is used by the core network device to determine a processing policy for the target service data flow. By running the foregoing unit, the access network device determines a quality of service parameter corresponding to a service data flow, and notifies the core network device of the quality of service parameter. The core network device schedules the service data flow based on the quality of service parameter determined by the access network device.

Optionally, the indication information is the target service feature information, and the second notification unit configured to notify the core network device of the target quality of service parameter and a second parameter. The target quality of service parameter and the second parameter are used by the core network device to determine the processing policy for the target service data flow, and the second parameter is some or all of information in the target service feature information.

By running the foregoing unit, when notifying the core network device of the quality of service parameter determined by the access network device, the access network device may further send, to the core network device, some or all of the information in the target service feature information from the service transmission device, so that the core network device further determines, with reference to the quality of service parameter determined by the access network device and some or all of the information in the target service feature information, the quality of service parameter corresponding to the target service data flow, thereby improving precision of setting the quality of service parameter by the core network device.

Optionally, the second notification unit configured to: add the target quality of service parameter to a protocol header of a service data packet, and send, to the core network device, the service data packet to which the target quality of service parameter is added; or send a service data packet to the core network device by using a dedicated bearer corresponding to the target quality of service parameter.

By running the foregoing unit, the access network device may directly or indirectly notify the core network device of the quality of service parameter corresponding to the service data flow.

It should be noted that functions of function units in the service transmission control device 100 described in this embodiment of the present disclosure may be based on the related descriptions of the service transmission control device in the embodiment shown in FIG. 3, FIG. 4, or FIG. 5. Details are not described herein again.

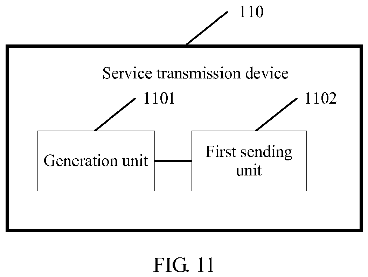

FIG. 11 is a schematic structural diagram of another service transmission device according to an embodiment of the present disclosure and which is not covered by the scope of the independent claims. The service transmission device may be user equipment or a server. As shown in FIG. 11, a service transmission device 110 includes a generation unit 1101 and a first sending unit 1102.

The generation unit 1101 is configured to generate indication information.

The first sending unit 1102 is configured to send the indication information to a service transmission control device. The indication information is used to indicate target service feature information corresponding to a target service data flow transmitted by the service transmission device, or the indication information is used to indicate a quality of service parameter corresponding to a target service data flow transmitted by the service transmission device, the target service data flow is one of a plurality of service data flows included in a target service transmitted by the service transmission device, and the indication information is used by the service transmission control device to determine a target quality of service parameter corresponding to the target service data flow.

By running the foregoing units, the service transmission device sends, to the service transmission control device, service feature indication information or quality of service parameter indication information that corresponds to the target service data flow. The service transmission control device may determine, based on the service feature indication information or the quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow.

In this embodiment, the service transmission device 110 is presented in a form of a function unit.

The "unit" herein may be an ASIC, a processor and a memory that execute one or more software or firmware programs, an integrated logic circuit, and/or another component that can provide the functions. The service transmission device 110 may be in a form shown in FIG. 7. The generation unit 1101 may be implemented by using the processor 701 in FIG. 7, and the first sending unit 1102 may be implemented by using the communications module 703 in FIG. 7. Alternatively, the service transmission device 110 may be in a form shown in FIG. 9. The generation unit 1101 may be implemented by using the processor 901 in FIG. 9, and the first sending unit 1102 may be implemented by using the transmitter 902 in FIG. 9.

Optionally, the service transmission device 110 further includes: a second sending unit, configured to: before the generation unit 1101 is configured to generate the indication information, send a service feature information list to the service transmission control device, where the service feature information list includes at least one piece of service feature information of the target service, and the service feature information list is used by the service transmission control device to determine a quality of service parameter corresponding to the at least one piece of service feature information.

Optionally, the service feature information is a quality of service parameter identifier, and the service transmission device 110 further includes: a receiving unit, configured to: before the generation unit 1101 is configured to generate the indication information, receive a table that is of mapping between the service feature information and the quality of service parameter and that is sent by the service transmission control device; and a determining unit, configured to determine the quality of service parameter identifier based on the mapping table.

By running the foregoing units, the service transmission device sends the service feature information list to the service transmission control device, and the service transmission control device determines, based on the service feature information list, a quality of service parameter corresponding to each piece of service feature information in the service feature information list. During service transmission, the service transmission control device determines, based on the service feature information list from the service transmission device, a quality of service parameter corresponding to a transmitted service data flow. Therefore, during service transmission, the service transmission control device may flexibly adjust QoS parameters for different service data flows.

It should be noted that functions of function units in the service transmission device 110 described in this embodiment of the present disclosure may be based on the related descriptions of the service transmission device in the embodiment shown in FIG. 3, FIG. 4, or FIG. 5. Details are not described herein again.

To facilitate better implementation of the embodiment of the present disclosure, an embodiment of the present disclosure further provides a computer readable storage medium. The computer readable storage medium stores one or more computer programs. The computer readable storage medium may be a magnetic disk, a compact disc, a ROM, a RAM, or the like. The one or more computer programs run on one or more processors in the service transmission control device. When the computer programs run, a procedure corresponding to the service transmission control device in the method embodiment shown in FIG. 3, FIG. 4, or FIG. 5 may be implemented. The one or more computer programs run on one or more processors in the service transmission device. When the computer programs run, a procedure corresponding to the service transmission device in the method embodiment shown in FIG. 3, FIG. 4, or FIG. 5 may be implemented.

In conclusion, by performing the embodiments of the present disclosure, the service transmission control device may determine, based on service feature indication information or quality of service parameter indication information that corresponds to the target service data flow, the target quality of service parameter corresponding to the target service data flow, so that the service transmission control device separately sets a quality of service parameter for each service data flow. Therefore, during service transmission, the service transmission control device may dynamically adjust the quality of service parameter for each service data flow.

Although the embodiments of present disclosure are described herein with reference to the embodiments, the scope of the claims of embodiments of the present disclosure should not be limited. In a process of implementing the embodiments of present disclosure that claim protection, a person skilled in the art may understand and implement all or some procedures in the embodiments by viewing the accompanying drawings, disclosed content, and the accompanying claims. Variations made in accordance with the claims of this application shall fall within the scope of the present disclosure. In the claims, the term "comprising" does not exclude another component or another step, and "a" or "one" does not exclude a case of "a plurality of'. A single controller or another unit may implement several functions enumerated in the claims. Some wordings are recorded in dependent claims that are different from each other, but this does not mean that these wordings cannot be combined to produce a better effect. A computer program may be stored/distributed in an appropriate medium such as an optical storage medium or a solid-state medium and be provided together with other hardware or be used as a part of hardware, or may be distributed in another manner, for example, by using the Internet (English: Internet), or another wired or wireless system.

## Claims

1. A service transmission control method, comprising
receiving (S301), by a service transmission control device (60, 80, 100), indication information from a service transmission device (70, 90, 110), wherein the indication information is an identifier of a target service feature information corresponding to a target service data flow transmitted by the service transmission device (70, 90, 110) and the target service feature information is a service feature information, and the target service data flow is one of a plurality of service data flows comprised in a target service transmitted by a service transmission device (70, 90, 110); and
determining (S303), by the service transmission control device (60, 80, 100), by querying a pre-recorded table of mapping between a service feature information identifier and the service feature information a target quality of service parameter corresponding to the target service data flow, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission control device (60, 80, 100) and is determined by a negotiation of the service transmission control device with the service transmission device (70, 90, 110) in advance for the service feature information and the service feature information identifier.

2. A service transmission control method, comprising:
generating (S301), by a service transmission device (70, 90, 110), indication information; and
sending (S302), by the service transmission device (70, 90, 110), the indication information to a service transmission control device (60, 80, 100), wherein the indication information is an identifier of a target service feature information corresponding to a target service data flow transmitted by the service transmission device (70, 90, 110) and the target service feature information is a service feature information, the target service data flow is one of a plurality of service data flows comprised in a target service transmitted by the service transmission device (70, 90, 110), and the indication information is used by the service transmission control device (60, 80, 100) to determine a target quality of service parameter corresponding to the target service data flow by querying a pre-recorded table of mapping between a service feature information identifier and the service feature information, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission device (70, 90, 110) and is determined by a negotiation of the service transmission control device
with the service transmission device (70, 90, 110) in advance for the service feature information and the service feature information identifier.

3. A service transmission control device (80), comprising a receiver (801) and a processor (802), wherein
the receiver (801) is configured to receive indication information from a service transmission device (70, 90, 110), wherein the indication information is an identifier of a target service feature information corresponding to a target service data flow transmitted by the service transmission device (70, 90, 110) and the target service feature information is a service feature information, and the target service data flow is one of a plurality of service data flows comprised in a target service transmitted by a service transmission device (70, 90, 110); and
the processor (802) is configured to determine, by querying a pre-recorded table of mapping between a service feature information identifier and the service feature information a target quality of service parameter corresponding to the target service data flow, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission control device (60, 80, 100) and is determined by a negotiation of the service transmission control device
with the service transmission device (70, 90, 110) in advance for the service feature information and the service feature information identifier.

4. The service transmission control device (80) according to claim 3, wherein the service transmission control device (80) is a core network device, and after the processor (802) is configured to determine, by querying the pre-recorded table of mapping between the service feature information identifier and the service feature information, the indication information, the target quality of service parameter corresponding to the target service data flow, the processor (802) is further configured to notify an access network device of the target quality of service parameter, wherein the target quality of service parameter is used by the access network device to determine a scheduling policy for the target service data flow.

5. The service transmission control device (80) according to claim 4, wherein the processor (802) is further configured to: add the target quality of service parameter to a protocol header of a service data packet, and send, to the access network device, the service data packet to which the target quality of service parameter is added; or the processor (802) is further configured to send a service data packet to the access network device by using a dedicated bearer corresponding to the target quality of service parameter.

6. The service transmission control device (80) according to any one of claims 3 to 5, wherein the service transmission control device (80) is an access network device, and after the processor (802) is configured to determine, based on the indication information, the target quality of service parameter corresponding to the target service data flow, the processor (802) is further configured to notify a core network device of the target quality of service parameter, wherein the target quality of service parameter is used by the core network device to determine a processing policy for the target service data flow.

7. The service transmission control device (80) according to claim 6, that the processor (802) is further configured to: add the target quality of service parameter to a protocol header of a service data packet, and send, to the core network device, the service data packet to which the target quality of service parameter is added; or the processor (802) is further configured to send a service data packet to the core network device by using a dedicated bearer corresponding to the target quality of service parameter.

8. A service transmission device (90), comprising a processor (901) and a transmitter (902), wherein
the processor (901) is configured to generate indication information; and
the transmitter (902) is configured to send the indication information to a service transmission control device (60, 80, 100), wherein the indication information is an identifier of a target service feature information corresponding to a target service data flow transmitted by the service transmission device (90) and the target service feature information is a service feature information, the target service data flow is one of a plurality of service data flows comprised in a target service transmitted by the service transmission device (90), and the indication information is used by the service transmission control device (60, 80, 100) to determine a target quality of service parameter corresponding to the target service data flow by querying a pre-recorded table of mapping between a service feature information identifier and the service feature information, wherein the service feature information comprises at least one of a play duration of a target segment, a bit rate or an encoding rate of the target segment, a cache size at a receive end or a cache threshold at the receive end and wherein the pre-recorded table of mapping is stored in the service transmission device (70, 90, 110) and is determined by a negotiation of the service transmission control device with the service transmission device (70, 90, 110) in advance for the service feature information and the service feature information identifier.

## Patentansprüche

1. Dienstübertragungssteuerungsverfahren, umfassend:
Empfangen (S301) einer Anzeigeinformation aus einer Dienstübertragungsvorrichtung (70, 90, 110) durch eine Dienstübertragungssteuerungsvorrichtung (60, 80, 100), wobei die Anzeigeinformation ein Bezeichner für Solldienstmerkmalinformationen ist, die einem durch die Dienstübertragungsvorrichtung (70, 90, 110) übertragenen Solldienstdatenfluss entspricht, und die Solldienstmerkmalinformationen Dienstmerkmalinformationen sind, und der Solldienstdatenfluss einer einer Vielzahl von Dienstdatenflüssen ist, die in einem durch eine Dienstübertragungsvorrichtung (70, 90, 110) übertragenen Solldienst enthalten sind; und
Bestimmen (S303) eines dem Solldienstdatenfluss entsprechenden Solldienstgüteparameters durch die Dienstübertragungssteuerungsvorrichtung (60, 80, 100), durch Abfragen einer voraufgezeichneten Abbildungstabelle zwischen einem Dienstmerkmalinformationsbezeichner und den Dienstmerkmalinformationen, wobei die Dienstmerkmalinformationen mindestens eines von einer Abspieldauer eines Sollsegments, einer Bitrate oder einer Codierrate des Sollsegments, einer Cache-Größe an einem Empfangsende oder einem Cache-Schwellenwert am Empfangsende umfassen, und
wobei die voraufgezeichnete Abbildungstabelle in der Dienstübertragungssteuerungsvorrichtung (60, 80, 100) gespeichert ist und durch eine Verhandlung der Dienstübertragungssteuerungsvorrichtung mit der Dienstübertragungsvorrichtung (70, 90, 110) im Voraus für die Dienstmerkmalinformationen und den Dienstmerkmalinformationsbezeichner bestimmt wird.

2. Dienstübertragungssteuerungsverfahren, umfassend:
Erzeugen (S301) einer Anzeigeinformation durch eine Dienstübertragungsvorrichtung (70, 90, 110); und
Senden (S302) der Anzeigeinformation durch die Dienstübertragungsvorrichtung (70, 90, 110) an eine Dienstübertragungssteuerungsvorrichtung (60, 80, 100), wobei die Anzeigeinformation ein Bezeichner für Solldienstmerkmalinformationen ist, die einem durch die Dienstübertragungsvorrichtung (70, 90, 110) übertragenen Solldienstdatenfluss entsprechen, und die Solldienstmerkmalinformationen Dienstmerkmalinformationen sind, wobei der Solldienstdatenfluss einer einer Vielzahl von Dienstdatenflüssen ist, die in einem durch die Dienstübertragungsvorrichtung (70, 90, 110) übertragenen Solldienst enthalten sind, und die Anzeigeinformation durch die Dienstübertragungssteuerungsvorrichtung (60, 80, 100) dazu verwendet wird, einen dem Solldienstdatenfluss entsprechenden Solldienstgüteparameter zu bestimmen, indem eine vorher aufgezeichnete Abbildungstabelle zwischen einem Dienstmerkmalinformationsbezeichner und den Dienstmerkmalinformationen abgefragt wird, wobei die Dienstmerkmalinformationen mindestens eines von einer Abspieldauer eines Sollsegments, einer Bitrate oder einer Codierrate des Sollsegments, einer Cache-Größe an einem Empfangsende oder einem Cache-Schwellenwert am Empfangsende umfassen, und wobei die voraufgezeichnete Abbildungstabelle in der Dienstübertragungsvorrichtung (70, 90, 110) gespeichert ist und durch eine Verhandlung der Dienstübertragungssteuerungsvorrichtung mit der Dienstübertragungsvorrichtung (70, 90, 110) im Voraus für die Dienstmerkmalinformationen und den Dienstmerkmalinformationsbezeichner bestimmt wird.

3. Dienstübertragungssteuerungsvorrichtung (80), umfassend einen Empfänger (801) und einen Prozessor (802), wobei
der Empfänger (801) dazu konfiguriert ist, Anzeigeinformationen aus einer Dienstübertragungsvorrichtung (70, 90, 110) zu empfangen, wobei die Anzeigeinformation ein Bezeichner von Solldienstmerkmalinformationen ist, die einem durch die Dienstübertragungsvorrichtung (70, 90, 110) übertragenen Solldienstdatenfluss entsprechen, und die Solldienstmerkmalinformationen Dienstmerkmalinformationen sind, und der Solldienstdatenfluss einer einer Vielzahl von Dienstdatenflüssen ist, die in einem durch eine Dienstübertragungsvorrichtung (70, 90, 110) übertragenen Solldienst enthalten sind; und
der Prozessor (802) dazu konfiguriert ist, durch Abfragen einer voraufgezeichneten Abbildungstabelle zwischen einem Dienstmerkmalinformationsbezeichner und den Dienstmerkmalinformationen einen dem Solldienstdatenfluss entsprechenden Solldienstgüteparameter zu bestimmen, wobei die Dienstmerkmalinformationen mindestens eines von einer Abspieldauer eines Sollsegments, einer Bitrate oder einer Codierrate des Sollsegments, einer Cache-Größe an einem Empfangsende oder einem Cache-Schwellenwert am Empfangsende umfassen, und wobei die voraufgezeichnete Abbildungstabelle in der Dienstübertragungssteuerungsvorrichtung (60, 80, 100) gespeichert ist und durch eine Verhandlung der Dienstübertragungssteuerungsvorrichtung mit der Dienstübertragungsvorrichtung (70, 90, 110) im Voraus für die Dienstmerkmalinformationen und den Dienstmerkmalinformationsbezeichner bestimmt wird.

4. Dienstübertragungssteuerungsvorrichtung (80) gemäß Anspruch 3, wobei die Dienstübertragungssteuerungsvorrichtung (80) eine Kernnetzwerkvorrichtung ist, und nachdem der Prozessor (802) dazu konfiguriert ist, durch Abfragen der voraufgezeichneten Abbildungstabelle zwischen dem Dienstmerkmalinformationsbezeichner und den Dienstmerkmalinformationen, der Anzeigeinformation, den dem Solldienstdatenfluss entsprechenden Solldienstgüteparameter zu bestimmen, ist der Prozessor (802) ferner dazu konfiguriert, eine Zugangsnetzwerkvorrichtung über den Solldienstgüteparameter zu benachrichtigen, wobei der Solldienstgüteparameter durch die Zugangsnetzwerkeinrichtung dazu verwendet wird, eine Planungsrichtlinie für den Solldienstdatenfluss zu bestimmen.

5. Dienstübertragungssteuerungsvorrichtung (80) gemäß Anspruch 4, wobei der Prozessor (802) ferner dazu konfiguriert ist, den Solldienstgüteparameter einem Protokollkopf eines Dienstdatenpakets hinzuzufügen und das Dienstdatenpaket, dem der Solldienstgüteparameter hinzugefügt ist, an die Zugangsnetzwerkvorrichtung zu senden; oder der Prozessor (802) ferner dazu konfiguriert ist, ein Dienstdatenpaket unter Verwendung eines dem Solldienstgüteparameter entsprechenden dedizierten Trägers an die Zugangsnetzwerkvorrichtung zu senden.

6. Dienstübertragungssteuerungsvorrichtung (80) gemäß einem der Ansprüche 3 bis 5, wobei die Dienstübertragungssteuerungsvorrichtung (80) eine Zugangsnetzwerkvorrichtung ist, und nachdem der Prozessor (802) dazu konfiguriert ist, basierend auf den Anzeigeinformationen den dem Solldienstdatenfluss entsprechenden Solldienstgüteparameter zu bestimmen, ist der Prozessor (802) ferner dazu konfiguriert, eine Kernnetzwerkvorrichtung über den Solldienstgüteparameter zu informieren, wobei der Solldienstgüteparameter durch die Kernnetzwerkvorrichtung dazu verwendet wird, eine Verarbeitungsrichtlinie für den Solldienstdatenfluss zu bestimmen.

7. Dienstübertragungssteuerungsvorrichtung (80) gemäß Anspruch 6, wobei der Prozessor (802) ferner dazu konfiguriert ist, den Solldienstgüteparameter einem Protokollkopf eines Dienstdatenpakets hinzuzufügen und das Dienstdatenpaket, dem der Solldienstgüteparameter hinzugefügt ist, an die Kernnetzwerkvorrichtung zu senden; oder der Prozessor (802) ferner dazu konfiguriert ist, ein Dienstdatenpaket mittels eines dem Solldienstgüteparameter entsprechenden dedizierten Trägers an die Kernnetzwerkvorrichtung zu senden.

8. Dienstübertragungsvorrichtung (90), umfassend einen Prozessor (901) und einen Sender (902), wobei
der Prozessor (901) dazu konfiguriert ist, Anzeigeinformationen zu erzeugen; und
der Sender (902) dazu konfiguriert ist, die Anzeigeinformation an eine Dienstübertragungssteuerungsvorrichtung (60, 80, 100) zu senden, wobei die Anzeigeinformation ein Bezeichner für Solldienstmerkmalinformationen ist, die einem durch die Dienstübertragungsvorrichtung (90) übertragenen Solldienstdatenfluss entsprechen, und die Solldienstmerkmalinformationen Dienstmerkmalinformationen sind, der Solldienstdatenfluss einer einer Vielzahl von Dienstdatenflüssen ist, die in einem durch die Dienstübertragungsvorrichtung (90) übertragenen Solldienst enthalten sind, und die Anzeigeinformation durch die Dienstübertragungssteuerungsvorrichtung (60, 80, 100) dazu verwendet wird, einen dem Solldienstdatenfluss entsprechenden Solldienstgüteparameter zu bestimmen, indem eine vorab aufgezeichnete Abbildungstabelle zwischen einem Dienstmerkmalinformationsbezeichner und der Dienstmerkmalinformationen abgefragt wird, wobei die Dienstmerkmalinformationen mindestens eines von einer Abspieldauer eines Sollsegments, einer Bitrate oder einer Codierrate des Sollsegments, einer Cache-Größe an einem Empfangsende oder einem Cache-Schwellenwert am Empfangsende umfassen, und wobei die voraufgezeichnete Abbildungstabelle in der Dienstübertragungsvorrichtung (70, 90, 110) gespeichert ist und durch eine Verhandlung der Dienstübertragungssteuerungsvorrichtung mit der Dienstübertragungsvorrichtung (70, 90, 110) im Voraus für die Dienstmerkmalinformationen und den Dienstmerkmalinformationsbezeichner bestimmt wird.

## Revendications

1. Procédé de commande de transmission de service, comprenant
la réception (S301), par un dispositif de commande de transmission de service (60, 80, 100), d'informations d'indication en provenance d'un dispositif de transmission de service (70, 90, 110), les informations d'indication étant un identifiant d'informations de caractéristiques de service cibles correspondant à un flux de données de service cible transmis par le dispositif de transmission de service (70, 90, 110) et les informations de caractéristiques de service cibles étant des informations de caractéristiques de service, et le flux de données de service cible étant l'un d'une pluralité de flux de données de service compris dans un service cible transmis par un dispositif de transmission de service (70, 90, 110) ; et
la détermination (S303), par le dispositif de commande de transmission de service (60, 80, 100), par interrogation d'une table préenregistrée de mise en correspondance entre un identifiant d'informations de caractéristiques de service et les informations de caractéristiques de service, d'un paramètre de qualité de service cible correspondant au flux de données de service cible, les informations de caractéristiques de service comprenant au moins l'un d'une durée de lecture d'un segment cible, d'un débit binaire ou d'un débit de codage du segment cible, d'une taille de mémoire cache à une extrémité de réception ou d'un seuil de mémoire cache à l'extrémité de réception et la table préenregistrée de mise en correspondance étant stockée dans le dispositif de commande de transmission de service (60, 80, 100) et étant déterminée par une négociation du dispositif de commande de transmission de service avec le dispositif de transmission de service (70, 90, 110) à l'avance pour les informations de caractéristiques de service et l'identifiant d'informations de caractéristiques de service.

2. Procédé de commande de transmission de service, comprenant
la génération (S301), par un dispositif de transmission de service (70, 90, 110), d'informations d'indication ; et
l'envoi (S302), par le dispositif de transmission de service (70, 90, 110), des informations d'indication à un dispositif de commande de transmission de service (60, 80, 100), les informations d'indication étant un identifiant d'informations de caractéristiques de service cibles correspondant à un flux de données de service cible transmis par le dispositif de transmission de service (70, 90, 110) et les informations de caractéristiques de service cibles étant des informations de caractéristiques de service, le flux de données de service cible étant l'un d'une pluralité de flux de données de service compris dans un service cible transmis par le dispositif de transmission de service (70, 90, 110), et les informations d'indication étant utilisées par le dispositif de commande de transmission de service (60, 80, 100) pour déterminer un paramètre de qualité de service cible correspondant au flux de données de service cible par interrogation d'une table préenregistrée de mise en correspondance entre un identifiant d'informations de caractéristiques de service et les informations de caractéristiques de service, les informations de caractéristiques de service comprenant au moins l'un d'une durée de lecture d'un segment cible, d'un débit binaire ou d'un débit de codage du segment cible, d'une taille de mémoire cache à une extrémité de réception ou d'un seuil de mémoire cache à l'extrémité de réception et la table préenregistrée de mise en correspondance étant stockée dans le dispositif de transmission de service (70, 90, 110) et étant déterminée par une négociation du dispositif de commande de transmission de service avec le dispositif de transmission de service (70, 90, 110) à l'avance pour les informations de caractéristiques de service et l'identifiant d'informations de caractéristiques de service.

3. Dispositif de commande de transmission de service (80), comprenant un récepteur (801) et un processeur (802), dans lequel
le récepteur (801) est configuré pour recevoir des informations d'indication en provenance d'un dispositif de transmission de service (70, 90, 110), les informations d'indication étant un identifiant d'informations de caractéristiques de service cibles correspondant à un flux de données de service cible transmis par le dispositif de transmission de service (70, 90, 110) et les informations de caractéristiques de service cibles étant des informations de caractéristiques de service, et le flux de données de service cible étant l'un d'une pluralité de flux de données de service compris dans un service cible transmis par un dispositif de transmission de service (70, 90, 110) ; et
le processeur (802) est configuré pour déterminer, par interrogation d'une table préenregistrée de mise en correspondance entre un identifiant d'informations de caractéristiques de service et les informations de caractéristiques de service, un paramètre de qualité de service cible correspondant au flux de données de service cible, les informations de caractéristiques de service comprenant au moins l'un d'une durée de lecture d'un segment cible, d'un débit binaire ou d'un débit de codage du segment cible, d'une taille de mémoire cache à une extrémité de réception ou d'un seuil de mémoire cache à l'extrémité de réception et la table préenregistrée de mise en correspondance étant stockée dans le dispositif de commande de transmission de service (60, 80, 100) et étant déterminée par une négociation du dispositif de commande de transmission de service avec le dispositif de transmission de service (70, 90, 110) à l'avance pour les informations de caractéristiques de service et l'identifiant d'informations de caractéristiques de service.

4. Dispositif de commande de transmission de service (80) selon la revendication 3, le dispositif de commande de transmission de service (80) étant un dispositif de réseau central, et après que le processeur (802) a été configuré pour déterminer, par interrogation de la table préenregistrée de mise en correspondance entre l'identifiant d'informations de caractéristiques de service et les informations de caractéristiques de service, les informations d'indication, le paramètre de qualité de service cible correspondant au flux de données de service cible, le processeur (802) étant en outre configuré pour notifier le paramètre de qualité de service cible à un dispositif de réseau d'accès, le paramètre de qualité de service cible étant utilisé par le dispositif de réseau d'accès pour déterminer une politique de planification pour le flux de données de service cible.

5. Dispositif de commande de transmission de service (80) selon la revendication 4, dans lequel le processeur (802) est en outre configuré pour : ajouter le paramètre de qualité de service cible à un en-tête de protocole d'un paquet de données de service, et envoyer, au dispositif de réseau d'accès, le paquet de données de service auquel le paramètre de qualité de service cible est ajouté ; ou le processeur (802) est en outre configuré pour envoyer un paquet de données de service au dispositif de réseau d'accès en utilisant un support dédié correspondant au paramètre de qualité de service cible.

6. Dispositif de commande de transmission de service (80) selon l'une quelconque des revendications 3 à 5, le dispositif de commande de transmission de service (80) étant un dispositif de réseau d'accès, et après que le processeur (802) a été configuré pour déterminer, sur la base des informations d'indication, le paramètre de qualité de service cible correspondant au flux de données de service cible, le processeur (802) étant en outre configuré pour notifier le paramètre de qualité de service cible à un dispositif de réseau central, le paramètre de qualité de service cible étant utilisé par le dispositif de réseau central pour déterminer une politique de traitement pour le flux de données de service cible.

7. Dispositif de commande de transmission de service (80) selon la revendication 6, dans lequel le processeur (802) est en outre configuré pour : ajouter le paramètre de qualité de service cible à un en-tête de protocole d'un paquet de données de service, et envoyer, au dispositif de réseau central, le paquet de données de service auquel le paramètre de qualité de service cible est ajouté ; ou le processeur (802) est en outre configuré pour envoyer un paquet de données de service au dispositif de réseau central en utilisant un support dédié correspondant au paramètre de qualité de service cible.

8. Dispositif de transmission de service (90), comprenant un processeur (901) et un émetteur (902), dans lequel
le processeur (901) est configuré pour générer des informations d'indication ; et l'émetteur (902) est configuré pour envoyer les informations d'indication à un dispositif de commande de transmission de service (60, 80, 100), les informations d'indication étant un identifiant d'informations de caractéristiques de service cibles correspondant à un flux de données de service cible transmis par le dispositif de transmission de service (90) et les informations de caractéristiques de service cibles étant des informations de caractéristiques de service, le flux de données de service cible étant l'un d'une pluralité de flux de données de service compris dans un service cible transmis par le dispositif de transmission de service (90), et les informations d'indication étant utilisées par le dispositif de commande de transmission de service (60, 80, 100) pour déterminer un paramètre de qualité de service cible correspondant au flux de données de service cible par interrogation d'une table préenregistrée de mise en correspondance entre un identifiant d'informations de caractéristiques de service et les informations de caractéristiques de service, les informations de caractéristiques de service comprenant au moins l'un d'une durée de lecture d'un segment cible, d'un débit binaire ou d'un débit de codage du segment cible, d'une taille de mémoire cache à une extrémité de réception ou d'un seuil de mémoire cache à l'extrémité de réception et la table préenregistrée de mise en correspondance étant stockée dans le dispositif de transmission de service (70, 90, 110) et étant déterminée par une négociation du dispositif de commande de transmission de service avec le dispositif de transmission de service (70, 90, 110) à l'avance pour les informations de caractéristiques de service et l'identifiant d'informations de caractéristiques de service.
